# EUROPEAN PATENT APPLICATION

(11) **EP 4 835 976 A1**
(43) Date of publication of application: **04.11.2026**
(21) Application number: 24913221.8
(22) Date of filing: 24.07.2024
(51) Int. Cl.: H01M 4/13, H01M 4/58, H01M 4/505, H01M 4/36, H01M 10/0562, H01M 4/62, H01M 4/04, H01M 4/66, H01M 4/587

(54) **POSITIVE ELECTRODE AND ALL-SOLID-STATE SECONDARY BATTERY COMPRISING SAME**

(30) Priority: 29.12.2023 KR 20230197215
(71) Applicant: SAMSUNG SDI CO., LTD., Yongin-si, Gyeonggi-do 17084 (KR)
(72) Inventor: SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); PARK, Tae Hyun, Yongin-Si Gyeonggi-do 17084 (KR); LEE, Ji Eun, Yongin-Si Gyeonggi-do 17084 (KR); YUN, Jong Hyuk, Yongin-Si Gyeonggi-do 17084 (KR)
(74) Representative: Meissner Bolte Partnerschaft mbB
(86) International application number: PCT/KR2024/010729
(87) International publication number: WO 2025/143407

(57) **Abstract**

Disclosed are a cathode and an all-solid-state secondary battery including the same, the cathode including: a cathode current collector; a cathode active material layer; and a protective layer on the cathode active material layer, wherein the protective layer includes an oxide-based cathode active material and a first sulfide-based solid electrolyte, the cathode active material layer incudes a sulfide-based composite cathode active material and a second sulfide-based solid electrolyte, the composite cathode active material includes a composite of Li₂S, a first ionic compound, and a first carbon-based material, and the oxide-based cathode active material has an olivine structure or a spinel structure.

## Description

### Technical Field

The present disclosure relates to a cathode and an all-solid-state secondary battery including the same.

### Background Art

Recently, due to industrial demands, the development of batteries with high energy density and safety is actively underway. For example, lithium batteries are used in a variety of applications, including information devices, communication devices, and automobiles. Since automobiles impact human lives, safety is also important.

Lithium batteries employing liquid electrolytes may have an increased risk of fire and/or explosion in the event of a short circuit. All-solid-state secondary batteries employing solid electrolytes instead of liquid electrolytes have been proposed. Solid electrolytes have a lower likelihood of ignition than liquid electrolytes.

### Disclosure of Invention

### Technical Problem

An aspect is to provide a cathode that simultaneously provides improved charge/discharge characteristics and thermal stability by employing a protective layer containing an oxide-based cathode active material between a cathode active material layer containing a sulfide-based cathode active material and a cathode current collector.

Another aspect is to provide an all-solid-state secondary battery including the cathode.

### Solution to Problem

According to an embodiment, there is provided a cathode including:
a cathode current collector; a cathode active material layer; and a protective layer on the cathode active material layer,
wherein the protective layer includes an oxide-based cathode active material and a first sulfide-based solid electrolyte,
the cathode active material layer incudes a sulfide-based composite cathode active material and a second sulfide-based solid electrolyte,
the composite cathode active material includes a composite of Li₂S, a first ionic compound, and a first carbon-based material, and
the oxide-based cathode active material has an olivine structure or a spinel structure.

According to another embodiment, there is provided an all-solid-state secondary battery including:
the cathode; an anode; and
an electrolyte layer disposed between the cathode and the anode,
wherein the anode includes an anode current collector and a first anode active material layer disposed on one side of the anode current collector.

### Advantageous Effects of Invention

According to an aspect, it is possible to provide a cathode having both improved charge/discharge characteristics and thermal stability by introducing a protective layer containing an oxide-based cathode active material between a cathode active material layer containing a sulfide-based cathode electrode active material and a cathode current collector and to provide an all-solid-state secondary battery including the cathode.

### Brief Description of Drawings

FIG. 1 is a cross-sectional view of an all-solid-state secondary battery according to an exemplary embodiment.
FIG. 2 is a cross-sectional view of an all-solid-state secondary battery according to an exemplary embodiment.
FIG. 3 is a cross-sectional view of an all-solid-state secondary battery according to an exemplary embodiment.
FIG. 4 is a cross-sectional view of an all-solid-state secondary battery according to an exemplary embodiment.
FIG. 5 is a cross-sectional view of an all-solid-state secondary battery according to an exemplary embodiment.
FIG. 6 is a cross-sectional view of an all-solid-state secondary battery according to an exemplary embodiment.
FIG. 7 is a cross-sectional view of an all-solid-state secondary battery according to an exemplary embodiment.

### Best Mode for Carrying out the Invention

Unless otherwise defined, all terms (including technical and scientific terms) used in the present disclosure have the same meaning as that commonly understood by one of those skilled in the art to which the present disclosure belongs. Further, the terms defined in commonly used dictionaries should be interpreted as having a meaning consistent with their meaning within the context of the relevant art and the present disclosure, and should not be interpreted in an idealized or overly formal sense.

Exemplary embodiments are described in the present disclosure with reference to cross-sectional views which are schematic views of idealized embodiments. In this way, for example, variations from the shapes of the drawings may be expected as a result of manufacturing techniques and/or tolerances. Therefore, embodiments described in the present disclosure should not be construed as being limited to the specific shapes of regions as illustrated in the drawings of the present disclosure, and should include, for example, deviations in shapes resulting from manufacturing. For example, a region illustrated or described as flat may typically have rough and/or non-linear features. Further, sharply illustrated angles may be round. Accordingly, the regions illustrated in the drawings are schematic in nature, and their shapes are not intended to illustrate the precise shape of the regions and are not intended to limit the scope of this disclosure.

The present inventive concept may be embodied in many different forms and should not be construed as limited to the embodiments described in the present disclosure. These embodiments are provided so that the present disclosure will be made thoroughly and completely, and are provided to fully transfer the scope of the present inventive concept to those skilled in the art. Identical reference numerals refer to identical components.

When a component is referred to as being "over" another component, it may be understood that it may be directly on another component, or that there may be other components intervening therebetween. In contrast, when a component is said to be "directly on" another component, there are no intervening component therebetween.

The terms "first," "second," "third," etc. may be used herein to describe various components, ingredients, regions, layers, and/or zones, these components, ingredients, regions, layers, and/or zones should not be limited by these terms. These terms are used only to distinguish one component, ingredient, region, layer or zone from another component, ingredient, region, layer or zone. Accordingly, a first component, ingredient, region, layer or zone described below may be referred to as a second component, ingredient, region, layer or zone without departing from the teachings of the present disclosure.

The terms used in the present disclosure is for the purpose of describing specific embodiments only and is not intended to limit the present inventive concept. The singular form used in the present application is intended to include the plural form including "at least one" unless the context clearly dictates otherwise. "At least one" should not be construed as limiting to the singular. As used in the present disclosure, the term "and/or" includes any and all combinations of one or more of the listed items. The terms "include" and/or "including" as used in the detailed description specify stated features, regions, integers, steps, operations, components and/or ingredients, but do not preclude the presence or addition of one or more other features, regions, integers, steps, operations, components and/or ingredients.

Spatially relative terms such as "bottom," "below," "lower," "upper," "top," and the like may be used herein to easily describe the relationship of one component or feature to another component or feature. It will be understood that spatially relative terms are intended to include different directions of a device when used or operated in addition to the directions illustrated in the drawings. For example, if the device in the drawing is overturned, a component described as being "under" or "below" another component or feature would be oriented "above" the other component or feature. Thus, the exemplary term "below" may include both upward and downward directions. The above device may be placed in other directions (rotated 90 degrees or in other directions), and the spatially relative terms used in the present disclosure may be interpreted accordingly.

The "group" refers to a group of the periodic table of elements according to the International Union of Pure and Applied Chemistry ("IUPAC") Group 1 to18 classification system.

In the present disclosure, the "particle size" refers to an average diameter when particles are spherical and refers to an average major axis length when the particles are non-spherical. The particle size may be measured using a particle size analyzer (PSA). The "particle size" is, for example, an average particle size. The "average particle size" is, for example, a median particle diameter, D50.

D50 is a size of the particle corresponding to 50% of the cumulative volume, calculated from the side of the particle with the smaller particle size in the size distribution of the particles measured by laser diffraction.

D90 is a size of the particle corresponding to 90% of the cumulative volume, calculated from the side of the particle with the smaller particle size in the size distribution of the particles measured by laser diffraction.

D10 is a size of the particle corresponding to 10% of the cumulative volume, calculated from the side of the particle with the smaller particle size in the size distribution of the particles measured by laser diffraction.

In the present disclosure, the "metal" includes both metals and metalloids such as silicon and germanium, in either an elemental or ionic state.

In the present disclosure, the "alloy" refers to a mixture of two or more metals.

In the present disclosure, the "electrode active material" refers to an electrode material capable of undergoing lithiation and delithiation.

In the present disclosure, the "cathode active material" refers to a cathode material capable of undergoing lithiation and delithiation.

In the present disclosure, the "anode active material" refers to an anode material capable of undergoing lithiation and delithiation.

In the present disclosure, the "lithiation" and "lithiating" refer to a process of adding lithium to an electrode active material.

In the present disclosure, the "delithiation" and "delithiating" refer to a process of removing lithium from an electrode active material.

In the present disclosure, the "charge" and "charging" refer to a process of providing electrochemical energy to a battery.

In the present disclosure, the "discharge" and "discharging" refer to a process of removing electrochemical energy from a battery.

In the present disclosure, the "positive electrode" or "cathode" refers to an electrode where electrochemical reduction and lithiation occur during a discharge process.

In the present disclosure, the "negative electrode" or "anode" refers to an electrode where electrochemical oxidation and delithiation occur during a discharge process.

In the present disclosure, the "ionic compound" is a chemical compound composed of ions that are grouped together by electrostatic forces referred to as ionic bonds.

Although specific embodiments have been described, alternatives, modifications, variations, improvements, and substantial equivalents, which are not currently anticipated or cannot be anticipated, may occur to the applicant or those skilled in the art. Accordingly, the appended claims, as filed and as amended, are intended to include all such alternatives, modifications, variations, improvements and substantial equivalents.

Hereinafter, according to exemplary embodiments, a cathode and all-solid-state secondary battery including the same will be described in more detail.

### [Cathode]

A cathode according to an embodiment includes: a cathode current collector; a cathode active material layer; and a protective layer (interlayer) on the cathode active material layer. The protective layer includes an oxide-based cathode active material and a first sulfide-based solid electrolyte. The cathode active material layer includes a sulfide-based composite cathode active material and a second sulfide-based solid electrolyte. The sulfide-based composite cathode active material includes a composite of Li₂S, a first ionic compound, and a first carbon-based material. The oxide-based cathode active material has an olivine structure or a spinel structure.

Since the protective layer including an oxide-based cathode active material is disposed on the cathode active material layer including a sulfide-based composite cathode active material, the thermal stability of the cathode may be improved. Since the cathode is provided with the protective layer, the all-solid-state secondary battery including this cathode may reduce the amount of heat generation when a short circuit occurs due to internal short circuits, external shocks, or the like., thereby more effectively suppressing the thermal runaway of the all-solid-state secondary battery. Since oxides are structurally more stable than sulfides, the thermal stability and structural stability of the cathode including a sulfide-based composite cathode active material may be further improved.

Since the protective layer is introduced, ignition caused by overcurrent, or the like may be prevented in the all-solid-state secondary battery that is charged beyond the design capacity of the all-solid-state secondary battery due to an increase in the resistance of the protective layer. Therefore, the thermal stability of the all-solid-state secondary battery may be improved.

Since the protective layer is provided on the cathode active material layer, that is, between the cathode active material layer and the electrolyte layer, the adhesion between the cathode active material layer and the electrolyte layer may be further improved. The protective layer may more effectively suppress the delamination between the cathode active material layer and the electrolyte layer, caused by a volume change in the cathode active material layer, during the charging and discharging of the all-solid-state secondary battery. The internal resistance of the all-solid-state secondary battery may be further reduced. The charge-discharge characteristics of the all-solid-state secondary battery may be further improved.

Since the protective layer is provided on the cathode active material layer, that is, between the cathode active material layer and the electrolyte layer, the formation of defects such as cracks in the electrolyte layer, caused by a volume change in the cathode active material layer, during charging and discharging may be prevented more effectively. As a result, internal short circuits and side reactions caused by cracks in this electrolyte layer may be prevented more effectively. Therefore, the deterioration of the cathode and the all-solid-state secondary battery including the same may be more effectively suppressed during the charging and discharging process. As a result, the charge-discharge characteristics, such as specific capacity, high--rate characteristics, and lifespan characteristics, of the all-soli-state battery may be further improved.

Since the protective layer is placed, for example, between the cathode active material layer and the electrolyte layer and has enhanced strength compared to the electrolyte layer and lithium metal, it may effectively block contact between the cathode active material layer and the lithium dendrites having penetrated the electrolyte layer. The protective layer may more effectively block short circuits between the cathode and the anode, caused by the growth of lithium dendrites, during the charging and discharging of the all-solid-state secondary battery. The oxide-based cathode active material of the protective layer may have a high elastic modulus compared to, for example, the sulfide-based solid electrolyte layer and lithium dendrites. Therefore, the protective layer may more effectively block the growth of lithium dendrites through defects in the sulfide-based solid electrolyte layer. For example, the elastic modulus (Young's modulus) of LiFePO₄ is about 47.3 GPa. For example, the elastic modulus (Young's modulus) of Li₆PS₅Cl is about 7.8 GPa. For example, the elastic modulus (Young's modulus) of lithium metal is about 4.9 GPa. The elastic modulus may be measured using, for example, a dynamic mechanical analyzer (DMA).

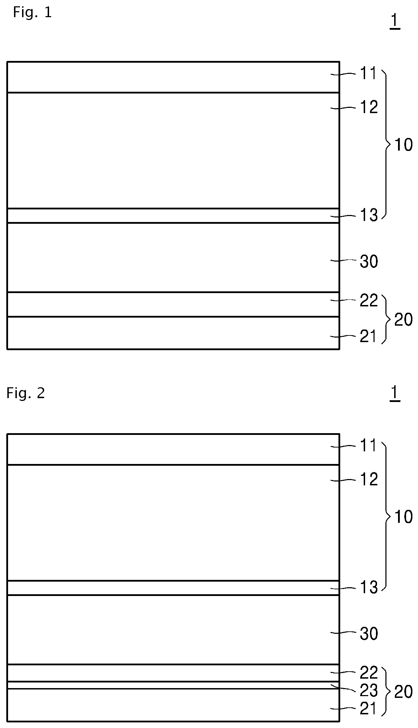

Referring to FIGS. 1 to 7, a cathode 10 includes a cathode current collector 11; a cathode active material layer 12, and a protective layer 13 on the cathode active material layer 12.

### [Protective layer]

Referring to FIGS. 1 to 7, a cathode 10 includes a cathode current collector 11; a cathode active material layer 12, and a protective layer 13 on the cathode active material layer 12.

The cathode active material layer 12 includes one surface adjacent to the cathode current collector and the other surface opposite to the one surface. The protective layer 13 is disposed on the other side of the cathode active material layer 12. The protective layer 13 is substantially disposed between the cathode active material layer 12 and the electrolyte layer 30.

### [Protective layer: Oxide-based cathode active material]

The protective layer 13 includes an oxide-based cathode active material and a first sulfide-based solid electrolyte.

The oxide-based cathode active material has an olivine crystal structure or a spinel crystal structure. The oxide-based cathode active material having an olivine crystal structure or a spinel crystal structure may have improved thermal stability and structural stability compared to an oxide-based cathode active material having a layered crystal structure. The oxide-based cathode active material having an olivine crystal structure suppress the escape of oxygen, for example, even at high temperatures. Therefore, the oxide-based cathode active material having an olivine crystal structure may more effectively suppress thermal runaway and/or ignition caused by short circuits, etc. The manganese-containing oxide-based cathode active material having a spinel crystal structure may prevent overcurrent in the all-solid-state secondary battery by exhibiting high DC resistance when a short circuit occurs. As a result, thermal runaway of the all-solid-state secondary battery may be prevented.

The oxide-based cathode active material may include, for example, a lithium transition metal oxide. The lithium transition metal oxide may include a lithium transition metal phosphate. The oxide-based cathode active material may include, for example, secondary lithium transition metal oxide particles. The secondary lithium transition metal oxide particle includes, for example, a plurality of primary lithium transition metal oxide particles and a carbon-based material. The plurality of primary lithium transition metal oxide particles and the carbon-based material may be aggregated to form the secondary lithium transition metal oxide particle. The particle size of the primary lithium transition metal oxide particle may be, for example, less than 1 µm, 500 nm or less, 300 nm or less, 200 nm or less, or 100 nm or less. The particle size of the primary lithium transition metal oxide particle may be, for example, 10 nm to 900 nm, 10 nm to 500 nm, 10 nm to 300 nm, 10 nm to 200 nm, or 10 nm to 100 nm. Since the primary lithium transition metal oxide particle has a particle size within this range, the ionic conductivity and/or electronic conductivity of the secondary lithium transition metal oxide particle formed by the aggregation of the primary lithium transition metal oxide particles and the carbon-based material may be further improved. As a result, the charge-discharge characteristics of the all-solid-state secondary battery may be further improved. The particle size of the secondary lithium transition metal oxide particle may be, for example, 10 µm or less, 5 µm or less, 3 µm or less, or 2 µm or less. The particle size of the secondary lithium transition metal oxide particle may be, for example, 0.5 to 10 µm, 0.5 to 5 µm, 0.5 to 3 µm, or 0.5 to 2 µm. Since the secondary lithium transition metal oxide particle has a particle size within this range, the internal resistance of the cathode having a protective layer including the secondary lithium transition metal oxide particles may be further reduced. As a result, the charge-discharge characteristics of the all-solid-state secondary battery may be further improved.

The oxide-based cathode active material may include, for example, a lithium transition metal oxide selected from lithium transition metal oxides represented by Formulas 1 to 4 below:

<Formula 1> LiₐM1ₓM2_{y}PO_{4-b}X_{b}

in Formula 1, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and
X is O, F, S, P or a combination thereof,

   <Formula 2> LiₐM3_{z}PO₄
in Formula 2, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or a combination thereof,

   <Formula 3> LiₐMn₂₋ₓM4ₓO_{4-b}X_{b}

   <Formula 4> LiₐCo₂₋ₓM5ₓO_{4-b}X_{b}
in Formulas 3 and 4, 0.90≤a≤1.1, 0≤x≤0.9, and 0≤b≤2,
M4 and M5 are each independently magnesium (Mg), calcium (Ca), strontium (Sr), barium (Ba), titanium (Ti), zirconium (Zr), niobium (Nb), molybdenum (Mo), tungsten (W), aluminum (Al), silicon (Si), nickel (Ni), manganese (Mn), chromium (Cr), iron (Fe), magnesium (Mg), scandium (Sc), vanadium (V), scandium (Sc), yttrium (Y), or a combination thereof, and
X is O, F, S, P, or a combination thereof.

The content of the oxide-based cathode active material included in the protective layer 13 may be, for example, 80 wt% or more, 85 wt% or more, or 90 wt% or more of the total weight of the protective layer 13. The content of the oxide-based cathode active material included in the protective layer 13 may be, for example, 80 wt% to 99 wt%, 85 wt% to 99 wt%, 90 wt% to 99 wt%, 90 wt% to 97 wt%, or 90 to 95 wt% of the total weight of the protective layer 13. Since the protective layer 13 includes the oxide-based cathode active material within this range, the cathode 10 and the all-solid-state secondary battery 1 may simultaneously provide excellent thermal stability and excellent charge-discharge characteristics. When the content of the oxide-based cathode active material is excessively low, the heat blocking effect of the protective layer 13 may be deteriorated. When the content of the oxide-based cathode active material is excessively high, the interfacial resistance of the protective layer 13 may increase excessively.

### [Protective layer: first sulfide-based solid electrolyte]

The protective layer 13 includes a first sulfide-based solid electrolyte.

The first sulfide-based solid electrolyte is, for example, at least one selected from Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are positive numbers, and Z is one of Ge, Zn, and Ga), Li₂S-GeS₂, Li₂S-SiS₂-Li₃PO₄, Li₂S-SiS₂-LiₚMO_{q} (where p and q are positive numbers, and M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ, (0≤x≤2). The first sulfide-based solid electrolyte is prepared by treating starting materials such as Li₂S and P₂S₅ using a melt quenching method or a mechanical milling method. After this treatment, heat treatment may be performed. The first sulfide-based solid electrolyte may be amorphous, crystalline, or a mixed state thereof. In addition, the first sulfide-based solid electrolyte may include, for example, sulfur (S), phosphorus (P), and lithium (Li) as at least constituent elements among the above-described sulfide-based solid electrolyte materials. For example, the first sulfide-based solid electrolyte may be a material including Li₂S-P₂S₅. When using the first sulfide-based solid electrolyte including Li₂S-P₂S₅, the mixed molar ratio of Li₂S and P₂S₅ is, for example, in the range of Li₂S: P₂S₅ = 20: 80 to 90: 10, 25: 75 to 90: 10, 30: 70 to 70: 30, and 40: 60 to 60: 40.

The first sulfide-based solid electrolyte may include, for example, an argyrodite-type solid electrolyte represented by Formula 5 below:

<Formula 5> Li⁺₁₂₋ₙ₋ₓAⁿ⁺X²⁻₆₋ₓY⁻ₓ

in Formula 5, A is P, As, Ge, Ga, Sb, Si, Sn, Al, In, Ti, V, Nb, or Ta, X is S, Se, or Te, Y is Cl, Br, I, F, CN, OCN, SCN, or N₃, and 1≤n≤5, 0≤x≤2. The first sulfide-based solid electrolyte and/or the second sulfide-based solid electrolyte may be an argyrodite-type compound including at least one selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). The first sulfide-based solid electrolyte and/or the second sulfide-based solid electrolyte may be, for example, an argyrodite-type compound including at least one selected from Li₆PS₅Cl, Li₆PS₅Br, and Li₆PS₅I.

The density of the argyrodite-type solid electrolyte may be about 1.5 to about 2.0 g/cc. Since the argyrodite-type solid electrolyte has a density of 1.5 g/cc or more, the internal resistance of an all-solid-state secondary battery is reduced, and the penetration of the electrolyte layer by Li may be effectively suppressed.

The cathode active material layer 12 includes a second sulfide-based solid electrolyte. The second sulfide-based solid electrolyte may be selected from the above-described first sulfide-based solid electrolytes.

The size of the first sulfide-based solid electrolyte included in the protective layer 13 may be smaller than the size of the second sulfide-based solid electrolyte included in the cathode active material layer 12. The size of the first sulfide-based solid electrolyte included in the protective layer 13 may be, for example, 90% or less, 80% or less, 70% or less, 60% or less, 50% or less, 40% or less, 30% or less, or 20% or less of the size of the second sulfide-based solid electrolyte included in the cathode active material layer 12. Since the size of the first sulfide-based solid electrolyte is smaller than that of the second sulfide-based solid electrolyte, the first sulfide-based solid electrolyte is filled more densely between the oxide-based cathode active material particles, thereby more effectively suppressing the formation of pores in the protective layer 13. As a result, the internal resistance of the protective layer 13, the interfacial resistance between the protective layer 13 and the cathode active material layer 12, and/or the interfacial resistance between the protective layer 13 and the electrolyte layer 30 may be reduced more effectively.

The average particle size D50 of the first sulfide-based solid electrolyte included in the protective layer 13 may be smaller than the average particle size D50 of the second sulfide-based solid electrolyte included in the cathode active material layer 12. The average particle size D50 of the first sulfide-based solid electrolyte included in the protective layer 13 may be 90% or less, 80% or less, 70% or less, 60% or less, 50% or less, 40% or less, 30% or less, or 20% or less of the average particle size D50 of the second sulfide-based solid electrolyte included in the cathode active material layer 12. The average particle size D50 is, for example, a median particle diameter (D50). The median particle diameter (D50) is a size of the particle corresponding to 50% of the cumulative volume, calculated from the side of the particle with the smaller particle size in the size distribution of the particles measured by laser diffraction.

The content of the first sulfide-based solid electrolyte included in the protective layer 13 may be, for example, 0.1 wt% to 10 wt%, 0.5 to 5 wt%, or 0.5 to 2 wt% of the total weight of the protective layer 13. When the content of the first sulfide-based solid electrolyte is excessively low, the ionic conductivity of the protective layer 13 may be reduced. The cycle characteristics of the all-solid-state secondary battery 1 may be deteriorated.

### [Protective layer: binder]

The protective layer 13 may further include a binder. Since the protective layer 13 includes a binder, the protective layer 13 may have improved binding strength with the cathode active material layer 12 and the electrolyte layer 30. Since the protective layer 13 includes a binder, the protective layer 13 may act as an adhesive layer. Since the protective layer 13 includes a binder, the detachment of the cathode active material layer 12 from the cathode current collector 11 may be effectively suppressed despite a volume change of the cathode active material layer 12 during the charging and discharging of the all-solid-state secondary battery 1.

The binder may be, for example, a binder that has oxidation resistance at high voltage. The binder may be, for example, styrene butadiene rubber (SBR), carboxymethylcellulose, polyacrylic acid, polymethyl methacrylate, polyisobutyl methacrylate, polyethyl acrylate, polybutyl acrylate, polyimide, polyamideimide, polyacrylonitrile, polyvinyl acetate, polytetrafluoroethylene, polyvinylidene fluoride, or polyethylene, but is not limited thereto, and any material that is used as a cathode binder in the relevant technical field is possible. The content of the binder included in the protective layer 13 may be, for example, 0.1 wt% to 10 wt%, 0.5 to 5 wt%, or 0.5 to 2 wt% of the total weight of the protective layer 13.

### [Protective Layer: others]

The protective layer may include 80 to 99 parts by weight of the oxide-based cathode active material, 1 to 10 parts by weight of the second sulfide-based solid electrolyte, and 1 to 10 parts by weight of the binder with respect to 100 parts by weight of the protective layer.

The protective layer may include 80 to 99 parts by weight, 85 to 99 parts by weight, 90 to 99 parts by weight, 90 to 99 parts by weight, 90 to 97 parts by weight, or 90 to 95 parts by weight of the oxide-based cathode active material with respect to 100 parts by weight of the protective layer. Since the protective layer includes the oxide-based cathode active material within this range, the protective layer may simultaneously provide excellent thermal stability and excellent charge-discharge characteristics.

The protective layer may include 1 to 10 parts by weight, 1 to 5 parts by weight, or 1 to 3 parts by weight of the second sulfide-based solid electrolyte with respect to 100 parts by weight of the protective layer. Since the protective layer includes the second sulfide-based solid electrolyte within this range, the protective layer may simultaneously provide excellent thermal stability and excellent charge-discharge characteristics.

The protective layer may include 1 to 10 parts by weight, 1 to 5 parts by weight, or 1 to 3 parts by weight of the binder with respect to 100 parts by weight of the protective layer. Since the protective layer includes the binder within this range, the protective layer may simultaneously provide excellent thermal stability and excellent charge-discharge characteristics.

The thickness of the protective layer 13 may be smaller than the thickness of the cathode active material layer 12. Since the thickness of the protective layer 13 is smaller than the thickness of the cathode active material layer 12, the reduction of discharge capacity due to the protective layer 13 may be minimized. The thickness of the protective layer 13 may be, for example, 20% or less, 10% or less, 5% or less, 3% or less, or 2% or less of the thickness of the cathode active material layer 12. The thickness of the protective layer 13 may be, for example, 0.1 to 20%, 0.5 to 10%, 1 to 5%, 1 to 3%, or 1 to 2% of the thickness of the cathode active material layer 12. Since the protective layer 13 has a thickness within this range, the protective layer 13 may provide excellent thermal stability and improved charge-discharge characteristics while suppressing the reduction in capacity of the all-solid-state secondary battery 1.

The thickness of the protective layer 13 may be, for example, 10 µm or less, 5 µm or less, 3 µm or less, 2 µm or less, or 1 µm or less. The thickness of the protective layer 13 may be, for example, 0.1 to 10 µm, 0.5 to 5 µm, 1 to 5 µm, 1 to 4 µm, or 1 to 3 µm. Since the protective layer 13 has a thickness within this range, the protective layer 13 may provide excellent thermal stability and improved charge-discharge characteristics while suppressing the reduction in capacity of the all-solid-state secondary battery 1. The thickness of the protective layer 13 may be measured by a scanning electron microscope.

### [Carbon layer]

Referring to FIGS. 1 to 7, the cathode 10 may further include a carbon layer (not shown) disposed between the cathode current collector 11 and the cathode active material layer 12.

The carbon layer is disposed directly on one side or both sides of the cathode current collector 11. Another layer may not be disposed between the cathode current collector 11 and the carbon layer. Since the carbon layer is disposed directly on one side or both sides of the cathode current collector 11, the binding strength between the cathode current collector 11 and the cathode active material layer 12 may be further improved. Since the carbon layer is disposed between the cathode current collector 11 and the cathode active material layer 12, during the charging and discharging process, the deterioration of the all-solid-state secondary battery 1 may be suppressed, and the cycle characteristics of the all-solid-state secondary battery 1 may be further improved.

The thickness of the carbon layer may be smaller than the thickness of the protective layer 13. The thickness of the carbon layer may be, for example, 90% or less, 80% or less, 70% or less, or 50% or less of the thickness of the protective layer 13. The thickness of the carbon layer may be, for example, 0.1 to 30%, 1 to 20%, or 5 to 15% of the thickness of the cathode current collector 11. The thickness of the carbon layer may be, for example, 5 µm or less, 4 µm or less, or 3 µm or less. The thickness of the carbon layer may be, for example, 0.1 to 5 µm, 0.5 to 5 µm, 1 to 5 µm, or 1 to 3 µm. Since the carbon layer has a thickness within this range, the binding strength between the cathode current collector 11 and the cathode active material layer 12 is further improved, and an increase in the interfacial resistance therebetween is suppressed. The thickness of the carbon layer may be measured from a scanning electron microscope (SEM) image of a cross- section of the carbon layer.

The carbon layer includes, for example, a carbon-based conductive material. The carbon-based conductive material included in the carbon layer may be selected from the carbon-based conductive materials used in the cathode active material layer 12. The carbon layer may include the same carbon-based conductive material as the carbon-based conductive material used in the cathode active material layer 12. Since the carbon layer includes a carbon-based conductive material, the carbon layer may be a conductive layer.

The carbon layer may additionally include, for example, a binder. Since the carbon layer additionally includes a binder, the binding strength between the cathode current collector 11 and the cathode active material layer 12 may be further improved The binder included in the carbon layer is, for example, a conductive binder or a non-conductive binder. The conductive binder is, for example, an ion-conductive binder and/or an electron-conductive binder. The binder having both ionic conductivity and electronic conductivity may be classified as both an ion-conductive binder and an electron-conductive binder.

The binder included in the carbon layer may be selected from the binders used in the cathode active material layer 12. The carbon layer may include the same binder as the binder used in the cathode active material layer 12. The binder included in the carbon layer is, for example, a fluorine-based binder. The fluorine-based binder included in the carbon layer is, for example, polyvinylidene fluoride (PVDF), polytetrafluoroethylene (PTFE), or a combination thereof. The carbon layer may be, for example, a binding layer including a binder. The carbon layer may be a conductive layer including a binder and a carbon-based conductive material.

The carbon layer may be disposed on the cathode current collector 11 in a dry or wet manner. The carbon layer may be disposed on the cathode current collector 11 by deposition such as CVD, PVD, or the like in a dry manner. The carbon layer may be disposed on the cathode current collector 11 by spin coating, dip coating, or the like in a wet manner. The carbon layer may be disposed on the cathode current collector 11 by depositing a carbon-based conductive material onto a substrate by deposition. The dry-coated carbon layer is composed of a carbon-based conductive material, and may not include a binder. The carbon layer may be disposed on the cathode current collector 11 by applying a composition including a carbon-based conductive material, a binder, and a solvent on the surface of an electrode current collector and drying the composition. The carbon layer may be a single-layer structure or a multi-layer structure including multiple layers. The multi-layer structure may be a 2-layer structure, a 3-layer structure, a 4-layer structure, or the like.

### [Cathode active material layer]

Referring to FIGS. 1 to 7, a cathode 10 includes a cathode current collector 11 and a cathode active material layer 12.

### [Cathode active material layer: composite cathode active material]

The cathode active material layer 12 includes a composite cathode active material and a first sulfide-based solid electrolyte.

The composite cathode active material includes a composite of Li₂S, a first ionic compound, and a first carbon-based material.

Since Li₂S forms a composite with a first ionic compound and a first carbon-based material, the ionic conductivity and electronic conductivity of Li₂S may be simultaneously improved. Since the composite of Li₂S, the first ionic compound, and the first carbon-based material includes the first ionic compound, the ionic conductivity of the composite cathode active material may be improved, and the internal resistance of the cathode including the composite cathode active material and the internal resistance of the all-solid-state secondary battery may be reduced. Since the composite of Li₂S, the first ionic compound, and the first carbon-based material includes the first carbon-based material, the ionic conductivity of the composite cathode active material may be improved, and the internal resistance of the cathode including the composite cathode active material and the internal resistance of the all-solid-state secondary battery may be reduced. As a result, the charge-discharge characteristics of the all-solid-state secondary battery including the composite cathode active material may be improved.

The composite of Li₂S, the first ionic compound, and the first carbon-based material is distinguished from a simple mixture of Li₂S, the first ionic compound, and the first carbon-based material. The simple mixture of Li₂S, the first ionic compound, and the first carbon-based material cannot maintain dense interfaces among Li₂S, the first ionic compound, and the first carbon-based material, thereby providing high interfacial resistance and consequently deteriorating the lifespan characteristics of the all-solid-state secondary battery.

A core includes the composite of Li₂S, the first ionic compound, and the first carbon-based material, and a shell including an organic filler is disposed on the core, thereby improving the thermal stability and moisture stability of the composite cathode active material. For example, the composite of Li₂S, the first ionic compound, and the first carbon-based material includes the first carbon-based material, and the first carbon-based material having a large specific surface area is in contact with oxygen to bond with oxygen, thereby generating oxidation heat. Ignition of the first carbon-based material may easily occur due to this oxidation heat. The core includes the composite of Li₂S, the first ionic compound, and the first carbon-based material, and the shell including an organic filler is disposed on the core, thereby blocking contact between the first carbon-based material and oxygen. The oxidation of the first carbon-based material and/or the generation of oxidation heat is suppressed. The thermal stability of the composite cathode active material may be improved. In addition, the core includes the composite of Li₂S, the first ionic compound, and the first carbon-based material, and the shell including an organic filler is disposed on the core, thereby suppressing the deterioration of the core due to moisture in the atmosphere The moisture stability of the composite cathode active material may be improved. As a result, since the composite cathode active material has improved thermal stability and improved moisture stability, the charge-discharge characteristics of the all-solid-state secondary battery including the composite cathode active material may be improved.

The core includes the composite of Li₂S, the first ionic compound, and the first carbon-based material, and the shell including an organic filler is disposed on the core, thereby effectively blocking side reactions between the core and the solid electrolyte in the cathode. The deterioration of the all-solid-state secondary battery caused by side reactions between the core and the solid electrolyte may be prevented. In contrast, in an all-solid-state secondary battery in which the core is in direct contact with a solid electrolyte, for example, a sulfide-based solid electrolyte, the all-solid-state secondary battery may deteriorate due to side reactions between the core and the solid electrolyte during charging and discharging.

The composite cathode active material includes a core, and the core includes a composite of Li₂S, a first ionic compound, and a first carbon-based material. The composite of Li₂S, the first ionic compound, and the first carbon-based material may include, for example, a composite represented by Li₂S-LiₐX_{b}-C (1≤a≤5, 1≤b≤5), a composite represented by Li₂S-M1ₐX_{b}-C (1≤a≤5, 1≤b≤5), a composite represented by Li₂S-M1ₐS_{b}-C (1≤a≤5, 1≤b≤5), or a combination thereof. M1 is, for example, Mg, Ca, Sr, Ba, Al, Ga, In, V, Nb, Sc, Fe, Ru, Os, or a combination thereof. X is, for example, I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof. a is, for example, 1, 2, 3, 4, or 5. b is, for example, 1, 2, 3, 4, or 5. C refers to a carbon-based material.

The first ionic compound is, for example, a first lithium salt, a first metal salt, a first metal sulfide, or a combination thereof.

The first lithium salt is, for example, a compound that does not include sulfur (S). The first lithium salt may be, for example, a binary compound or a ternary compound. The first lithium salt may be, for example, a binary compound composed of lithium and one element selected from Groups 13 to 17 of the Periodic Table of Elements. The first lithium salt may be, for example, a ternary compound composed of lithium and two elements selected from Groups 13 to 17 of the Periodic Table of Elements. The binary compound may include, for example, LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof. Since the composite cathode active material includes such a binary compound, the ionic conductivity of the composite cathode active material may be further improved. Since the cathode includes such a composite cathode active material, the internal resistance of the cathode provided with the composite cathode active material may be further reduced. As a result, the cycle characteristics of the all-solid-state secondary battery including such a cathode may be further improved. The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. Since the composite cathode active material includes such a ternary compound, the ionic conductivity of the composite cathode active material may be further improved. Since the cathode includes such a composite cathode active material, the internal resistance of the cathode may be further reduced. As a result, the cycle characteristics of the all-solid-state secondary battery including such a cathode may be further improved.

The first metal salt is, for example, a compound that does not include lithium (Li). The first metal salt may be, for example, a compound composed of a metal other than lithium and one element selected from Groups 13 to 17 of the Periodic Table of Elements. The first metal salt may include, for example, AlF₃, AlCl₃, AlBr₃, CaF₂, CaCl₂, CaBr₂, or a combination thereof. Since the composite cathode active material includes such a first metal salt compound, the ionic conductivity of the composite cathode active material may be further improved. Since the cathode includes such a composite cathode active material, the internal resistance of the cathode provided with the composite cathode active material may be further reduced. As a result, the cycle characteristics of the all-solid-state secondary battery including such a cathode may be further improved.

The first metal sulfide is, for example, a sulfide that does not include lithium (Li). The first metal sulfide may be, for example, a compound composed of a metal other than lithium and one element selected from Groups 13 to 17 of the Periodic Table of Elements. The first metal sulfide may include, for example, FeS, MgS, CaS, Al₂S₃, V₂S₃, FeS₂, VS₂, MnS, NiS, CuS, or a combination thereof. Since the composite cathode active material includes such a first metal salt compound, the ionic conductivity of the composite cathode active material may be further improved. Since the cathode includes such a composite cathode active material, the internal resistance of the cathode provided with the composite cathode active material may be further reduced. As a result, the cycle characteristics of the all-solid-state secondary battery including such a cathode may be further improved.

The composite of Li₂S, the first ionic compound, and the first carbon-based material may include, for example, a solid solution of Li₂S and the first ionic compound. Since the composite of Li₂S, the first ionic compound, and the first carbon-based material includes the solid solution of Li₂S and the first ionic compound, the composite of Li₂S, the first ionic compound, and the first carbon-based material may have improved ionic conductivity. For example, since the solid solution of Li₂S and the first ionic compound includes lithium ions disposed in Li₂S crystallites, the ionic conductivity of the solid solution of Li₂S and the first ionic compound may be improved compared to the ionic conductivity of Li₂S. As a result, the ionic conductivity of the composite of Li₂S, the first ionic compound, and the first carbonaceous material may be improved, and the internal resistance of the composite of Li₂S, the first ionic compound, and the first carbonaceous material may be reduced. Since the composite cathode active material includes such a composite, the ionic conductivity of the composite cathode active material may be further improved. Since the cathode includes such a composite cathode active material, the internal resistance of the cathode provided with the composite cathode active material may be further reduced. As a result, the cycle characteristics of the all-solid-state secondary battery including such a cathode may be further improved.

The size of Li₂S crystallites obtained from the XRD spectrum of the composite of Li₂S, the first ionic compound, and the first carbon-based material may be, for example, 20 nm or less, 15 nm or less, or 10 nm or less. The size of the Li₂S crystallites obtained from the XRD spectrum of the composite of Li₂S, the first ionic compound, and the first carbon-based material may be, for example, 1 to 20 nm, 1 to 15 nm, or 3 to 10 nm. As the size of the Li₂S crystallites decreases, the contact area between Li₂S and the first ionic compound may be further increased. As the contact area between Li₂S and the first ionic compound increases, the ionic conductivity of the composite of Li₂S and the first ionic compound may be further increased Since the composite cathode active material includes such a composite, the ionic conductivity of the composite cathode active material may be further improved. Since the cathode includes such a composite cathode active material, the internal resistance of the cathode provided with the composite cathode active material may be further reduced. As a result, the cycle characteristics of the all-solid-state secondary battery including such a cathode may be further improved.

In the composite of Li₂S, the first ionic compound, and the first carbon-based material, for example, the content of Li₂S may be higher than the content of the first ionic compound. In the composite of Li₂S, the first ionic compound, and the first carbon-based material, the molar ratio of Li₂S and the first ionic compound may be, for example, 50:50 to 95:5, 55:45 to 90:10, 60:40 to 90:10, or 70:30 to 90:10. Since the composite of Li₂S, the first ionic compound, and the first carbon-based material has such a molar ratio of Li₂S and the first ionic compound, this composite may simultaneously provide improved ionic conductivity and excellent ductility. As a result, the durability of the composite cathode active material including the composite of Li₂S, the first ionic compound, and the first carbon-based material may be improved. The durability of the cathode and all-solid-state secondary battery each including the composite anode active material may be improved. When the molar ratio of Li₂S is excessively high, the effect of improving ion conductivity by the lithium salt may be negligible. When the molar ratio of Li₂S is excessively low, the energy density of the all-solid-state secondary battery including the composite cathode active material may decrease.

The composite of Li₂S, the first ionic compound, and the first carbon-based material includes Li₂S. Since Li₂S has a high theoretical capacity, it may provide an all-solid-state secondary battery having high energy density. Since Li₂S has low ionic conductivity and/or electronic conductivity, it forms the composite with the first ionic compound and the first carbon-based material to overcome these disadvantages. In the composite of Li₂S, the first ionic compound, and the first carbon-based material, the content of Li₂S is, for example, 30 to 95 wt%, 50 to 95 wt%, 50 to 90 wt%, 50 to 80 wt%, or 50 to 70 wt% of the total weight of the composite of Li₂S, the first ionic compound, and the first carbon-based material. Alternatively, in the composite of Li₂S, the first ionic compound, and the first carbon-based material, the content of Li₂S is, for example, 10 to 95 wt%, 10 to 80 wt%, 20 to 70 wt%, 30 to 60 wt%, or 40 to 60 wt% of the total weight of the composite of Li₂S, the first ionic compound, and the first carbon-based material. Since the composite of Li₂S, the first ionic compound, and the first carbon-based material has a content of Li₂S within this range, this composite may simultaneously provide improved ionic conductivity and excellent ductility. As a result, the durability of the composite cathode active material including the composite of Li₂S, the first ionic compound, and the first carbon-based material, and the durability of the cathode and all-solid-state secondary battery each provided with this composite cathode active material, may be improved. When the content of Li₂S increases excessively, it may not be easy to improve the ionic conductivity and/or electronic conductivity of Li₂S. When the content of Li₂S is excessively low, the energy density of the all-solid-state secondary battery may decrease.

In the composite of Li₂S, the first ionic compound, and the first carbon-based material, the content of the first ionic compound may be, for example, 1 to 50 wt%, 5 to 50 wt%, 10 to 50 wt%, 20 to 50 wt%, or 30 to 50 wt% of the total weight of the composite of Li₂S, the first ionic compound, and the first carbon-based material. Since the composite of Li₂S, the first ionic compound, and the first carbon-based material has a content of the first ionic compound within this range, this composite may simultaneously provide improved ionic conductivity and excellent ductility. As a result, the durability of a solid electrolyte membrane including the composite of Li₂S, the first ionic compound, and the first carbon-based material may be improved.

In the composite of Li₂S, the first ionic compound, and the first carbon-based material, the content of the first carbon-based material may be, for example, 1 to 20 wt%, 5 to 20 wt%, or 10 to 20 wt% of the total weight of the composite of Li₂S, the first ionic compound, and the first carbon-based material. When the content of the first carbon-based material increases excessively, the energy density of the all-solid-state secondary battery may decrease. When the content of the first carbon-based material excessively decreases, the electronic conductivity of the composite of Li₂S, the first ionic compound, and the first carbon-based material deteriorates, and thus the internal resistance of the composite cathode active material may increase. As a result, the cycle characteristics of the all-solid-state secondary battery may deteriorate.

The composite of Li₂S, the first ionic compound, and the first carbon-based material may include, for example, 10 to 80 parts by weight of Li₂S, 1 to 40 parts by weight of the first ionic compound, and 1 to 20 parts by weight of the first carbon-based material with respect to 100 parts by weight of this composite. The content of Li₂S included in the composite of Li₂S, the first ionic compound, and the first carbon-based material may be, for example, 10 to 80 parts by weight, 20 to 70 parts by weight, 30 to 60 parts by weight, or 40 to 60 parts by weight of Li₂S with respect to 100 parts by weight of the composite of Li₂S, the first ionic compound, and the first carbon-based material. The content of the first ionic compound included in the composite of Li₂S, the first ionic compound, and the first carbon-based material may, for example, be 1 to 40 parts by weight, 5 to 40 parts by weight, 10 to 40 parts by weight, 15 to 40 parts by weight, 20 to 40 parts by weight, or 25 to 35 parts by weight of the first ionic compound with respect to 100 parts by weight of the composite of Li₂S, the first ionic compound, and the first carbon-based material. The content of the first carbon-based material included in the composite of Li₂S, the first ionic compound, and the first carbon-based material may, for example, be 1 to 20 parts by weight, 5 to 20 parts by weight, or 10 to 20 parts by weight of the carbon-based material with respect to 100 parts by weight of the composite of Li₂S, the first ionic compound, and the first carbon-based material. Since the composite of Li₂S, the first ionic compound, and the first carbon-based material has a composition of Li₂S, the first ionic compound, and the first carbon-based material within this range, the composite cathode active material including the composite of Li₂S, the first ionic compound, and the first carbon-based material may provide excellent ionic conductivity and/or electronic conductivity.

The size of the composite of Li₂S, the first ionic compound, and the first carbon-based material may be, for example, 1 to 20 µm, 1 to 15 µm, 1 to 10 µm, 2 to 10 µm, or 3 to 10 µm. Since the composite of Li₂S, the first ionic compound, and the first carbon-based material has a size within this range, it may simultaneously provide improved ionic conductivity and electronic conductivity. When the size of the composite of Li₂S, the first ionic compound, and the first carbon-based material is excessively small, it may be difficult to secure conductive pathways between the composite cathode active material particles due to the micronization of the carbon-based material. When the size of the composite of Li₂S, the first ionic compound, and the first carbon-based material is excessively large, the degree of composite formation may be reduced. It may be difficult to secure electron-conducting pathways and ion-conducting pathways within the composite of Li₂S, the first ionic compound, and the first carbon-based material. The size of the composite of Li₂S, the first ionic compound, and the first carbon-based material may be, for example, a D50 particle size. The size of the composite of Li₂S, the first ionic compound, and the first carbon-based material may be measured by a particle size analyzer (PSA) using a laser. The size of the composite of Li₂S, the first ionic compound, and the first carbon-based material may be calculated by software from a scanning electron microscope image of the composite powder.

The D10 particle size of the composite of Li₂S, the first ionic compound, and the first carbon-based material may be, for example, 1 µm or more, 1.2 µm or more, 1.5 µm or more, or 2 µm or more. Since the D10 particle size of the composite of Li₂S, the first ionic compound, and the first carbon-based material is within this range, the content of fine particles in the composite of Li₂S, the first ionic compound, and the first carbon-based material may decrease. As the content of fine particles in the composite of Li₂S, the first ionic compound, and the first carbon-based material decreases, the density of the cathode including the composite cathode active material increases, and thus the energy density of the all-solid-state secondary battery including the cathode may be improved. As the content of fine particles in the composite of Li₂S, the first ionic compound, and the first carbon-based material increases, the interfacial resistance between the particles of the composite of Li₂S, the first ionic compound, and the first carbon-based material may increase, and thus it may become difficult to form a conductive network. As a result, the cycle characteristics of the all-solid-state secondary battery including the composite of Li₂S, the first ionic compound, and the first carbon-based material may be deteriorated. The D10 particle size may be measured by a particle size analyzer (PSA) using a laser.

The size of the Li₂S particles included in the composite of Li₂S, the first ionic compound, and the first carbon-based material may be, for example, 2 µm or less, 1.5 µm or less, or 1 µm or less. The size of the Li₂S particles included in the composite of Li₂S, the first ionic compound, and the first carbon-based material may be, for example, 0.1 to 2 µm, 0.1 to 1.5 µm, or 0.1 to 1 µm or less. As the volume change of the Li₂S particles during charging and discharging is suppressed by having a size within this range to, the deterioration of the composite cathode active material including the composite of Li₂S, the first ionic compound, and the first carbon-based material during charging and discharging may be suppressed. When the size of the Li₂S particles increases excessively, the deterioration of the composite cathode active material including the composite of Li₂S, the first ionic compound, and the first carbon-based material may be accelerated due to an increase in the volume change of the composite during charging and discharging. As a result, the cycle characteristics of the all-solid-state secondary battery including such a composite cathode active material may be deteriorated. The size of the Li₂S particles included in the composite of Li₂S, the first ionic compound, and the first carbon-based material may be measured using, for example, a scanning electron microscope, a transmission electron microscope, or the like.

The composite of Li₂S, the first ionic compound, and the first carbon-based material includes a first carbon-based material. As the first carbon-based material, for example, any material containing carbon atoms and used as a conductive material in the relevant technical field is possible.

The first carbon-based material may include, for example, amorphous carbon, crystalline carbon, or a combination thereof. Since the first carbon-based material includes amorphous carbon, side reactions between the first carbon-based material and the solid electrolyte may be suppressed. Therefore, the cycle characteristics of the all-solid-state secondary battery including the composite of Li₂S, the first ionic compound, and the first carbon-based material may be further improved. The first carbon-based material may be, for example, a sintered product of a carbon precursor.

The carbon-based material may include, for example, carbon nanostructures. The carbon nanostructures may be, for example, one-dimensional carbon nanostructures, two-dimensional carbon nanostructures, three-dimensional carbon nanostructures, or a combination thereof. The carbon nanostructures may be, for example, carbon nanotubes, carbon nanofibers, carbon nanobelts, carbon nanorods, graphene, or a combination thereof.

The carbon-based materials may include, for example, a porous carbon-based material or a non-porous carbon-based material. The porous carbon-based material may include, for example, periodic and regular two-dimensional or three-dimensional pores. Alternatively, the porous carbon-based material may include, for example, non-periodic and irregular two-dimensional or three-dimensional pores.

The first carbon-based material may include, for example, a fibrous carbon-based material, a particulate carbon-based material, or a combination thereof.

The first carbon-based material may include, for example, a fibrous carbon-based material. Since the composite of Li₂S, the first ionic compound, and the first carbon-based material includes a fibrous carbon-based material, the electronic conductivity of the composite of Li₂S, the first ionic compound, and the first carbon-based material may be further improved. Since the composite of Li₂S, the first ionic compound, and the first carbon-based material includes a fibrous carbon-based material, the electronic conduction from the surface to the interior of the composite of Li₂S, the first ionic compound, and the first carbon-based material may be performed more easily. The internal resistance of the composite cathode active material including the composite of Li₂S, the first ionic compound, and the first carbon-based material may be reduced As result, the cycle characteristics of the all-solid-state secondary battery including the composite cathode active material may be further improved. The aspect ratio of the fibrous carbon-based material may be, for example, 5 or more, 10 or more, or 20 or more. The aspect ratio of the fibrous carbon-based material may be, for example, 5 to 30, 3 to 30, 4 to 30, 5 to 30, 10 to 30, or 20 to 30. The aspect ratio of the fibrous carbon-based material may be, for example, 5 to 30, 5 to 20, or 5 to 10. Since the fibrous carbon-based material has an aspect ratio within this range, the overall electronic conductivity of the composite may be improved, and the imbalance in local electronic conductivity within the composite may be further alleviated. The fibrous carbon-based material may include, for example, carbon nanostructures. The carbon nanostructures may include, for example, carbon nanofibers (CNF), carbon nanotubes (CNT), carbon nanobelts, carbon nanorods, or a combination thereof. The carbon nanostructures may form a primary carbon nanostructure composed of a single carbon nanostructure and a secondary carbon nanostructure composed of multiple aggregated carbon nanostructures.

The diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. The length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. The diameter and length of the primary carbon nanostructure may be measured from scanning electron microscope (SEM) or transmission electron microscope (TEM) images. Alternatively, the diameter and/or length of the primary carbon nanostructure may be measured by laser diffraction.

The secondary carbon nanostructure is, for example, a structure formed by wholly or partially assembling the primary carbon nanostructures to form a bundle or cluster shape. The secondary carbon nanostructure may include, for example, a bundle-type carbon nanostructure, a rope-type carbon nanostructure, or a combination thereof. The diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. The length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm or more. The diameter and length of the secondary carbon nanostructure may be measured from scanning electron microscope (SEM) images or optical microscope images. Alternatively, the diameter and/or length of the secondary carbon nanostructure may be measured by laser diffraction. The secondary carbon nanostructure may be converted into primary carbon nanostructures by dispersing them in a solvent, and then used to prepare the composite.

The first carbon-based material may include, for example, a particulate carbon-based material. The particulate carbon-based material may include, for example, carbon black such as ketjen black, acetylene black, denka black, thermal black, or channel black; graphite, active carbon, or a combination thereof. The aspect ratio of the particulate carbon-based material may be, for example, 4 or less, 3 or less, or 2 or less. The aspect ratio of the particulate carbon-based material may be, for example, 1 to 4, 1 to 3, or 1 to 2.

### [Cathode active material layer: first sulfide-based solid electrolyte]

The cathode active material layer 12 includes a first sulfide-based solid electrolyte. The first sulfide-based solid electrolyte included in the cathode active material layer 12)may be the same as or different from the solid electrolyte included in the electrolyte layer 30. The first sulfide-based solid electrolyte may be selected from the second sulfide-based solid electrolytes of the protective layer.

The first sulfide-based solid electrolyte included in the cathode active material layer 12 may have a smaller average particle size D50 than the solid electrolyte included in the electrolyte layer 30. For example, the average particle size D50 of the first sulfide-based solid electrolyte included in the cathode active material layer 12 may be 90 % or less, 80 % or less, 70 % or less, 60 % or less, 50 % or less, 40 % or less, 30 % or less, or 20 % or less of the average particle size D50 of the solid electrolyte included in the electrolyte layer 30. The average particle size D50 is, for example, a median particle diameter (D50). The median particle diameter (D50) is a size of the particle corresponding to 50% of the cumulative volume, calculated from the side of the particle with the smaller particle size in the size distribution of the particles measured by laser diffraction.

The first sulfide-based solid electrolyte may be included in an amount of 10 to 90 parts by weight, 10 to 80 parts by weight, 10 to 60 parts by weight, 10 to 50 parts by weight, 20 to 50 parts by weight, or 30 to 50 parts by weight with respect to100 parts by weight of the cathode active material layer 12. When the content of the first sulfide-based solid electrolyte decreases excessively, the internal resistance of the cathode 10 may increase, and thus the cycle characteristics of the all-solid-state secondary battery 1 may be deteriorated. When the content of the first sulfide-based solid electrolyte increases excessively, the energy density of the all-solid-state secondary battery 1 may decrease.

### [Cathode active material layer: conductive material]

The cathode active material layer 12 may further include a conductive material. The conductive material may be, for example, a carbon-based conductive material, a metal-based conductive material, or a combination thereof. The carbon-based conductive material may be, but is not limited thereto, for example, graphite, carbon black, acetylene black, ketjen black, carbon fiber, or a combination thereof, and any material used as a carbon-based conductive material in the relevant technical field may be used. The metal-based conductive material may be, but is not limited to, metal powder, metal fiber, or a combination thereof, and any material used as a metal-based conductive material in the relevant technical field may be used. The content of the conductive material included in the cathode active material layer 12 may be, for example, 1 wt% to 30 wt%, 1 wt% to 20 wt%, or 1 wt% to 10 wt% of the total weight of the cathode active material layer 12.

The cathode active material layer 12 may further include a second carbon-based material as the conductive material. The second carbon-based material may include, for example, a fibrous carbon-based material. The aspect ratio of the fibrous carbon-based material may be, for example, 5 or more, 10 or more, or 20 or more.

The fibrous carbon-based material may include, for example, fibrous carbon nanostructures. The fibrous carbon nanostructures may include, for example, carbon nanofibers, carbon nanotubes, carbon nanobelts, carbon nanorods, or a combination thereof. The second carbon-based material is distinguished from the first carbon-based material constituting a part of the composite cathode active material, in that it is simply mixed with the composite cathode active material.

The cathode active material layer 12 may not further include the second carbon-based material. In the cathode active material layer 12, the carbon-based material may be disposed only in the composite cathode active material. The cathode active material layer 12 may not additionally include another second carbon-based material in addition to the composite cathode active material having the first carbon-based material. Since the cathode active material layer does not include another second carbon-based material, the energy density of the cathode and all-solid-state secondary battery 1 may be improved, and the manufacturing process thereof may be simplified.

### [Cathode active material layer: binder]

The cathode active material layer 12 may further include a binder. The binder may be, but is not limited to, styrene butadiene rubber (SBR), polytetrafluoroethylene, polyvinylidene fluoride, polyethylene, etc., and any binder used in the relevant technical field may be used. The content of the binder included in the cathode active material layer 12 may be, for example, 0.1 wt% to 10 wt%, 0.5 to 5 wt%, or 0.5 to 2 wt% of the total weight of the cathode active material layer 12. The binder may be omitted.

### [Cathode active material layer: other additives]

The cathode active material layer 12 may further include additives such as fillers, coating agents, dispersants, and ion conductive aids in addition to the above-described cathode active material, solid electrolyte, binder, and conductive material.

As fillers, coating agents, dispersants, and ion conductivity aids that may be included in the cathode active material layer 12, known materials generally used in electrodes of all-solid-state secondary batteries may be used.

### [Cathode active material layer: dry cathode film]

Referring to FIGS. 1 to 7, the cathode active material layer 12 may be, for example, a dry cathode active material layer 12.

Since the dry cathode active material layer 12 is manufactured without using a process solvent, it is distinguished from a wet cathode active material layer manufactured from a slurry in which a cathode composite is mixed with a solvent. In the manufacturing process of the dry cathode active material layer 12, disadvantages such as non-uniformity of binder concentration occurring during the drying process of the process solvent may be overcome. The dry cathode active material layer 12 may have improved uniformity of binder distribution within the cathode active material layer compared to the wet cathode active material layer.

The dry cathode active material layer 12 may include a dry composite cathode active material and a first dry sulfide-based solid electrolyte.

The dry cathode active material layer 12 may include, for example, a dry composite cathode active material. The dry composite cathode active material is a composite cathode active material that is not impregnated, dissolved, or dispersed in a process solvent during the manufacturing process of the dry cathode active material layer 12. The dry composite cathode active material is, for example, a composite cathode active material that does not include a process solvent or come into contact with a process solvent during the manufacturing process of the dry cathode active material layer 12.

The dry cathode active material layer 12 may include, for example, a first dry sulfide-based solid electrolyte. The first dry sulfide-based solid electrolyte is a first sulfide-based solid electrolyte that is not impregnated, dissolved, or dispersed in a process solvent during the manufacturing process of the dry cathode active material layer 12. The first dry first sulfide-based solid electrolyte is, for example, a first sulfide-based solid electrolyte that does not include a process solvent or come into contact with a process solvent during the manufacturing process of the dry cathode active material layer 12.

The dry cathode active material layer 12 may include a dry binder. The dry binder is, for example, a binder that is not impregnated, dissolved, or dispersed in a process solvent during the manufacturing process of the dry cathode active material layer 12. The dry binder is, for example, a binder that does not include a process solvent or come into contact with a process solvent during the manufacturing process of the dry cathode active material layer 12. The dry binder is, for example, a fibrillized binder or a fibrous binder. The fibrillized binder or fibrous binder may serve as a porous matrix that supports and binds the dry cathode active material and other components included in the dry cathode active material layer 12. The fibrillized binder or fibrous binder is intermittently disposed on the surface of the dry cathode active material without aggregating and binds dry cathode active materials, thereby effectively suppressing an increase in internal resistance of the dry cathode active material layer 12 caused by the dry binder. The fibrillized binder or fibrous binder may be confirmed to have a fibrous shape by scanning electron microscope images of a cross-section of a cathode. The fibrillized binder or fibrous binder has an aspect ratio of 10 or more, 20 or more, 50 or more, or 100 or more.

The dry binder may be, for example, polytetrafluoroethylene (PTFE), polyvinylidene fluoride-hexapropylene (PVDF-HFP) copolymer, polyvinylidene fluoride (PVDF), polyvinyl alcohol, polyacrylonitrile, carboxymethylcellulose (CMC), starch, hydroxypropylcellulose, cellulose, polyvinylpyrrolidone, polyethylene, polypropylene, ethylene-propylene-diene polymer (EPDM), sulfonated-EPDM, styrene butadiene rubber (SBR), fluororubber, or copolymers thereof, but is not necessarily limited thereto, and any binder used in the manufacture of a dry electrode is possible. The dry binder may include, in particular, a fluorine-based binder. The fluorine-based binder is, for example, polytetrafluoroethylene (PTFE), a polyvinylidene fluoride-hexapropylene (PVDF-HFP) copolymer, or polyvinylidene fluoride (PVDF).

The dry cathode active material layer 12 may include, for example, a dry cathode film. The dry cathode active material layer 12 may be formed, for example, by disposing a dry cathode film on the cathode current collector 11. The dry cathode film may have substantially the same composition and structure as the above-described dry cathode active material layer.

The dry cathode film is, for example, a self-standing film. The dry cathode film may maintain a film form without a support. Therefore, the dry cathode film may be prepared as a separate self-supporting film and then disposed on the cathode current collector. Since the dry cathode film 100 is manufactured in a dry manner, it does not include any process solvent that is intentionally added. For example, the dry cathode film 100 does not include a residual process solvent. A trace amount of an unintended solvent may remain in the dry cathode film, but this solvent is not an intentionally added process solvent. Therefore, the dry cathode film is distinguished from a wet cathde film that is manufactured by mixing components and a process solvent and then removing some or all of the process solvent by drying.

### [Cathode active material layer: others]

The thickness of the cathode active material layer 12 may be, for example, 50 to 500 µm, 50 to 400 µm, 50 to 300 µm, or 50 to 250 µm.

Since the cathode active material layer 12 has a thickness within this range, the cathode 10 and all-solid-state secondary battery 1 each including the cathode active material layer 12 may simultaneously provide increased energy density, improved thermal stability, and improved charge-discharge characteristics.

### [Cathode current collector]

As the cathode current collector 11, a plate or foil made of, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof may be used. The cathode current collector 11 may be omitted. The thickness of the cathode current collector 11 is, for example, 1 µm to 100 µm, 1 µm to 50 µm, 5 µm to 25 µm, or 10 µm to 20 µm.

The cathode current collector 11 may include, for example, a base film and a metal layer disposed on one or both sides of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Since the base film includes an insulating thermoplastic polymer, when a short circuit occurs, the base film softens or liquefies, thereby blocking battery operation and suppressing a rapid increase in current. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer acts as an electrochemical fuse, and may thus be cut off in case of overcurrent to prevent short circuits. The limit current and maximum current may be controlled by adjusting the thickness of the metal layer. The metal layer may be plated or deposited on the base film. When the thickness of the metal layer decreases, the limit current and/or maximum current of the cathode current collector 11 decreases, so the stability of a lithium battery during a short circuit may be improved. A lead tab may be added to the metal layer for external connection. The lead tab may be welded to the metal layer or the metal layer/base film laminate by ultrasonic welding, laser welding, spot welding, or the like. During welding, while the base film and/or the metal layer melts, the metal layer may be electrically connected to the lead tab. To make the welding between the metal layer and the lead tab stronger, a metal chip may be added between the metal layer and the lead tab. The metal chip may be a thin piece of the same material as the metal of the metal layer. The metal chip may be, for example, a metal foil, a metal mesh, or the like. The metal chip may be, for example, aluminum foil, copper foil, SUS foil, or the like. Since the metal chip is disposed on the metal layer and then welded with the lead tab, the lead tab may be welded to a metal chip/metal layer laminate or a metal chip/metal layer/base film laminate. During welding, while the base film, the metal layer, and/or the metal chip melts, the metal layer or the metal layer/metal chip laminate may be electrically connected to the lead tab. A metal chip and/or a lead tab may be added onto a portion of the metal layer. The thickness of the base film may be, for example, 1 to 50 µm, 1.5 to 50 µm, 1.5 to 40 µm, or 1 to 30 µm. Since the base film has a thickness within this range, the weight of an electrode assembly may be reduced more effectively. The melting point of the base film may be, for example, from 100 to 300 °C, 100 to 250 °C, or 100 to 200 °C. Since the base film has a melting point within this range, the base film melts during the process of welding the lead tab, and may thus be easily bonded to the lead tab. Surface treatment, such as corona treatment, may be performed on the base film to improve adhesion between the base film and the metal layer. The thickness of the metal layer may be, for example, 0.01 to 3 µm, 0.1 to 3 µm, 0.1 to 2 µm, or 0.1 to 1 µm. Since the metal layer has a thickness within this range, the stability of an electrode assembly may be secured while maintaining conductivity. The thickness of the metal chip may be, for example, 2 to 10 µm, 2 to 7 µm, or 4 to 6 µm. Since the metal piece has a thickness within this range, the connection between the metal layer and the lead tab may be performed more easily. Since the cathode current collector 11 has this structure, the weight of the cathode may be reduced, and as a result, the energy density of the cathode and the lithium battery may be improved.

### [First inactive member]

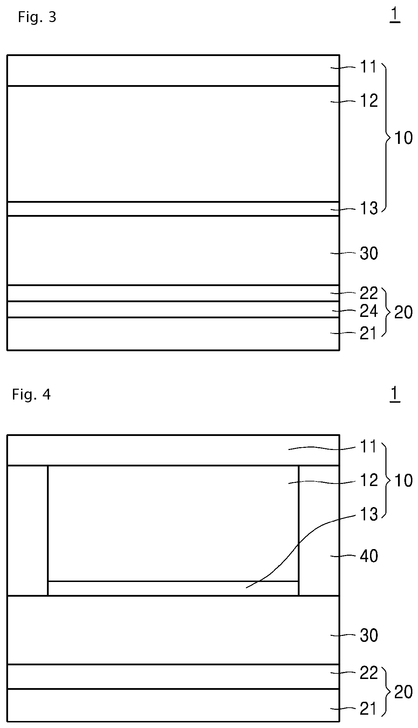

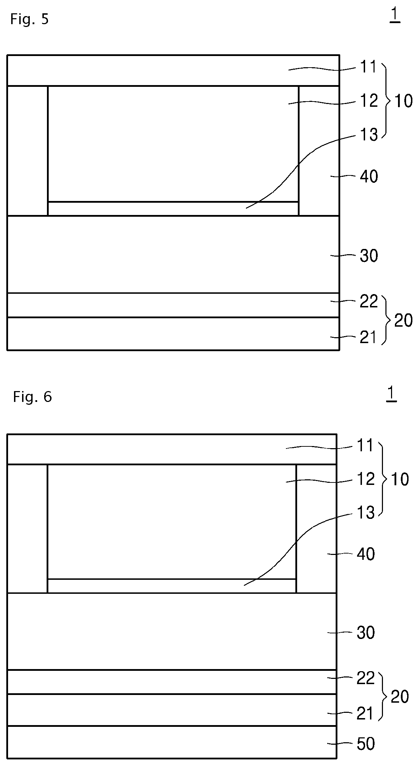

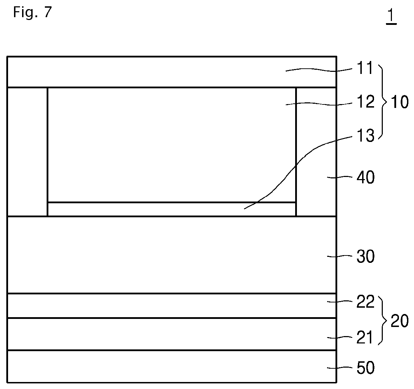

Referring to FIGS. 4 to 7, the cathode 10 includes a cathode current collector 11 and a cathode active material layer 12 disposed on one side of the cathode current collector 11. A first inactive member 40 is disposed on one side surface of the cathode 10. Referring to FIGS. 4 and 6, the first inactive member 40 is disposed on one side surface of the cathode active material layer 12 and one side surface of the cathode current collector 11. Referring to FIGS. 5 and 7, the first inactive member 40 is disposed on one side surface of the cathode active material layer 12 and is disposed between the solid electrolyte layer 30 and the cathode current collector 11 facing the solid electrolyte layer 30. The first inactive member 40 may not be disposed on one side surface of the cathode current collector 11. The electrolyte layer 30 may be, for example, a solid electrolyte layer.

Since the cathode 10 includes the first inactive member 40, cracks of the electrolyte layer 30 is prevented during the manufacturing and/or charging and discharging of the all-solid-state secondary battery 1, resulting in improved cycle characteristics of the all-solid-state secondary battery 2. In the all-solid-state secondary battery 1 that does not include the first inactive member 40, when manufacturing and charging and/or discharging the all-solid-state secondary battery 1, uneven pressure is applied to the electrolyte layer 30 in contact with the cathode 10, thereby increasing the possibility of a short circuit occurring due to cracks occurring in the electrolyte layer 30 and the growth of lithium metal through the cracks.

In the all-solid-state secondary battery 1, the thickness of the first inactive member 40 is greater than or equal to the thickness of the cathode active material layer 12. Alternatively, in the all-solid-state secondary battery 1, the thickness of the first inactive member 40 is substantially equal to the thickness of the cathode 10. Since the thickness of the first inactive member 40 is equal to the thickness of the cathode 10, a uniform pressure is applied between the cathode 10 and the electrolyte layer 30, and the cathode 10 and the electrolyte layer 30 are sufficiently adhered to each other, so that the interfacial resistance between the cathode 10 and the electrolyte layer 30 may be reduced. In addition, since the electrolyte layer 30 is sufficiently sintered during the process of manufacturing the all-solid-state secondary battery 1 by pressing, the internal resistance of the electrolyte layer 30 and the all-solid-state secondary battery 1 including the same is reduced.

The first inactive member 40 surrounds the side surface of the cathode 10 and comes into contact with the electrolyte layer 30. Since the first inactive member 40 surrounds the side surface of the cathode 10 and comes into contact with the solid electrolyte layer 30, cracks of the electrolyte layer 30 that occur due to a pressure difference during the pressing process in the electrolyte layer 30 that does not come into contact with the cathode 10 may be effectively suppressed. The first inactive member 40 surrounds the side surface of the cathode 10 and is separated from the anode 20, more specifically, the first anode active material layer 22. The first inactive member 40 surrounds the side surface of the cathode 10, comes into contact with the electrolyte layer 30, and is separated from the anode 20. Accordingly, the possibility of a short circuit occurring due to the physical contact between the cathode 10 and the first anode active material layer 22 or due to the overcharging of lithium is suppressed. For example, the first inactive member 40 is disposed on one side surface of the cathode active material layer 12 and, at the same time, is disposed on one surface of the cathode current collector 11, thereby more effectively suppressing the possibility of a short circuit occurring due to the contact between the cathode current collector 11 and the anode 20.

Referring to FIGS. 4 to 7, the first inactive member 40 extends from one side surface of the cathode 30 to the end portion of the electrolyte layer 30. Since the first inactive member 40 extends to the end portion of the electrolyte layer 30, cracks occurring at the end portion of the electrolyte layer 30 may be suppressed. The end portion of the electrolyte layer 30 is an outermost portion that comes into contact with the side surface of the electrolyte layer 30. The first inactive member 40 extends to the outermost portion that comes into contact with the side surface of the electrolyte layer 30. The first inactive member 40 is separated from the anode 20, more specifically, from the first anode active material layer 22. The first inactive member 40 extends to the end portion of the electrolyte layer 30, but does not come into contact with the anode 20. The first inactive member 40 fills a space extending from one side surface of the cathode 10 to the end portion of the electrolyte layer 30.

Referring to FIGS. 4 to 7, the width of the first inactive member 40 extending from one side surface of the cathode 10 to the end of the electrolyte layer 30 is, for example, 1 to 30 %, 1 to 25 %, 1 to 20 %, 1 to 15 %, 1 to 10 %, or 1 to 5 % of the width between one side surface of cathode 10 and the other side surface facing the one side surface thereof. When the width of the first inactive member 40 is too large, the energy density of the all-solid-state secondary battery 1 decreases. When the width of the first inactive member 40 is too small, the effect of disposing the inactive member 40 is slight.

The area of the cathode 10 is smaller than the area of the electrolyte layer 30 in contact with the cathode 10. The first inactive member 40 is disposed to surround the side surface of the cathode 10 to compensate for a difference between the area of the cathode 10 and the area of the electrolyte layer 30. Since the area of the first inactive member 40 compensates for the difference between the area of the cathode 10 and the area of the electrolyte layer 30, cracks in the electrolyte layer 30 that occur due to the pressure difference during the pressing process are effectively suppressed. For example, the sum of the area of the cathode 10 and the area of the first inactive member 40 is equal to the area of the electrolyte layer 30. The electrolyte layer 30 may be, for example, a solid electrolyte layer.

The area of the cathode 10 is, for example, less than 100%, 99% or less, 98% or less, 97% or less, 96% or less, or 95% or less of the area of the electrolyte layer 30. The area of the cathode 10 is, for example, less than 50% to 100%, 50% to 99%, 55% to 98%, 60% to 97%, 70% to 96%, 80% to 95%, or 85% to 95% of the area of the electrolyte layer 30.

When the area of the cathode 10 is equal to or larger than the area of the electrolyte layer 30, the possibility of a short circuit occurring due to physical contact between the cathode 10 and the first anode active material layer 22 or overcharging of lithium increases. The area of the cathode 10 is, for example, equal to the area of the cathode active material layer 12. The area of the cathode 10 is, for example, equal to the area of the cathode current collector 11.

The area of the first inactive member 40 is, for example, 50% or less, 40% or less, 30% or less, 20% or less, or 10% or less of the area of the cathode 10. The area of the first inactive member 40 is, for example, 1% to 50%, 5% to 40%, 5% to 30%, 5% to 20%, or 5% to 15% of the area of the cathode 10.

The area of the cathode 10 is smaller than the area of the anode current collector 21. The area of the cathode 10 is, for example, less than 100%, 99% or less, 98% or less, 97% or less, 96% or less, or 95% or less of the area of the anode current collector 21. The area of the cathode 10 is, for example, less than 50% to 100%, 50% to 99%, 55% to 98%, 60% to 97%, 70% to 96%, 80% to 95%, or 85% to 95% of the area of the anode current collector 21. The area of the anode current collector 21 is, for example, equal to the area of the anode 20. The area of the anode current collector 21 is, for example, equal to the area of the first anode active material layer 22.

In the present disclosure, the "same" area, length, width, thickness and/or shape includes all instances of having "substantially the same" area, length, width, thickness and/or shape, except where the area, length, width, thickness and/or shape are intentionally different from each other. The "same" area, length, width and/or thickness includes a range where the unintended difference in area, length, width and/or thickness of the objects being compared is, for example, less than 3%, less than 2%, less than 1%, less than 0.5%, or less than 0.1%.

The thickness of the first inactive member 40 is, for example, greater than the thickness of the first anode active material layer 22. The thickness of the first anode active material layer 22 is, for example, 50% or less, 40% or less, 30% or less, 20% or less, or 10% or less of the thickness of the inactive member 40. The thickness of the first anode active material layer 22 is, for example, 1% to 50%, 1% to 40%, 1% to 30%, 1% to 20%, or 1% to 10% of the thickness of the inactive member 40.

The first inactive member 40 may be a gasket. Since a gasket is used as the first inactive member 40, cracks of the electrolyte layer 30 that occur due to a pressure difference during a pressing process may be effectively suppressed.

The first inactive member 40 has, for example, a single-layer structure. Alternatively, although not shown in the drawings, the first inactive member 40 may have a multilayer structure. In the first inactive member 40 having a multilayer structure, each layer may have a different composition. The first inactive member 40 having a multilayer structure may include, for example, at least one adhesive layer and at least one support layer. The first inactive member 40 having a multilayer structure may include, for example, at least one adhesive layer and at least one support layer. The adhesive layer effectively prevents a gap between the cathode 10 and the solid electrolyte layer 30 due to a change in the volume of the cathode 10 that occurs during the charging and discharging process of the all-solid-state secondary battery 1, and provides a bonding force between the support layer and another layer, thereby improving the film strength of the first inactive member 40. The support layer provides a supporting force to the first inactive member 40, prevents unevenness of pressure applied to the electrolyte layer 30 during a pressing process or a charging and discharging process, and prevents the deformation of the all-solid-state secondary battery 1 to be manufactured.

The first inactive member 40 is, for example, a first flame-retardant inactive member. Since the first flame-retardant inactive member provides flame retardancy, the possibility of thermal runaway and ignition of the all-solid-state secondary battery 1 may be prevented. As a result, the safety of the all-solid-state secondary battery 1 is further improved. Since the first flame-retardant inactive member absorbs residual moisture in the all-solid-state secondary battery 1, the deterioration of the all-solid-state secondary battery 1 is prevented, and thus the lifespan characteristics of the all-solid-state secondary battery 1 are improved.

The first flame-retardant inactive member includes, for example, a matrix and a filler. The matrix includes, for example, a substrate and a stiffener. The matrix includes, for example, a fibrous substrate and a fibrous stiffener. The matrix may have elasticity by including a substrate. Therefore, the matrix may effectively accommodate the volume change during charging and discharging of the all-solid-state secondary battery 1 and may be disposed at various positions. The substrate included in the matrix includes, for example, a first fibrous material. Since the substrate includes the first fibrous material, a change in the volume of the cathode 10, occurring during the charging and discharging process of the all-solid-state secondary battery 1, may be effectively accommodated, and the deformation of the first inactive member 40 due to the volume change of the cathode 10 may be effectively suppressed. The first fibrous material is, for example, a material having an aspect ratio of 5 or more, 20 or more, or 50 or more. The first fibrous material is, for example, a material having an aspect ratio of 5 to 1000, 20 to 1000, or 50 to 1000. The first fibrous material is, for example, an insulating material. Since the first fibrous material is an insulating material, a short circuit between the cathode 10 and the anode 20 due to lithium dendrites, or the like, occurring during the charging and discharging process of the all-solid-state secondary battery 1, may be effectively prevented. The first fibrous material includes, for example, at least one selected from a pulp fiber, an insulating polymer fiber, and an ion-conducting polymer fiber. Since the matrix includes the stiffener, the strength of the matrix is improved. Therefore, the matrix may prevent an excessive volume change during the charging and discharging of the all-solid-state secondary battery 1 and prevent the deformation of the all-solid-state secondary battery 1. The stiffener included in the matrix includes, for example, a second fibrous material. Since the stiffener includes the second fibrous material, the strength of the matrix may be increased more uniformly. The second fibrous material is, for example, a material having an aspect ratio of 3 or more, 5 or more, or 10 or more. The second fibrous material is, for example, a material having an aspect ratio of 3 to 100, 5 to 100, or 10 to 100. The second fibrous material is, for example, a flame-retardant material. Since the second fibrous material is a flame-retardant material, ignition due to thermal runaway occurring during the charging and discharging process of the all-solid-state secondary battery 1 or due to external impact may be effectively suppressed. The second fibrous material includes, for example, a glass fiber, a metal oxide fiber, a ceramic fiber, or the like.

The first flame-retardant inactive member includes a filler in addition to the matrix. The filler may be disposed within the matrix, on the surface of the matrix, or both within the matrix and on the surface of the matrix. The filler is, for example, an inorganic material. The filler included in the first flame-retardant inactive member is, for example, a moisture getter. The filler removes moisture remaining in the all-solid-state secondary battery 1 by adsorbing moisture at a temperature of, for example, lower than 100°C, thereby preventing the deterioration of the all-solid-state secondary battery 1. In addition, when the temperature of the all-solid-state secondary battery 1 increases to 150°C or higher due to thermal runaway that occurs during the charging and discharging process of the all-solid-state secondary battery 1 or due to external impact, the filler may effectively suppress the ignition of the all-solid-state secondary battery 1 by desorbing the adsorbed moisture. That is, the filler is, for example, a flame retardant. The filler is, for example, a metal hydroxide having moisture adsorption properties. The metal hydroxide included in the filler is, for example, Mg(OH)₂, Fe(OH)₃, Sb(OH)₃, Sn(OH)₄, Tl(OH)₃, Zr(OH)₄, Al(OH)₃, or a combination thereof. The content of the filler included in the first flame-retardant inactive member is, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the first flame-retardant inactive member.

The first flame-retardant inactive member may further include, for example, a binder. The binder may include, for example, a curable polymer or a non-curable polymer. The curable polymer is a polymer that is cured by heat and/or pressure. The curable polymer is, for example, solid at room temperature The first flame-retardant inactive member 40 includes, for example, a heat-pressing curable film and/or a cured product thereof. The heat-pressing curable film is, for example, TSA-66 of Toray Co., Ltd.

The first flame-retardant inactive member may additionally include other materials in addition to the above-described substrate, stiffener, filler, and binder. The first flame-retardant inactive member may further include, for example, at least one selected from paper, an insulating polymer, an ion-conducting polymer, an insulating inorganic material, an oxide-based solid electrolyte, and a sulfide-based solid electrolyte. The insulating polymer may be an olefinic polymer such as polypropylene (PP) or polyethylene (PE).

The density of the substrate or stiffener included in the first flame-retardant inactive member may be, for example, 10% to 300%, 10% to 150%, 10% to 140%, 10% to 130%, or 10% to 120% of the density of the cathode active material included in the cathode active material layer 12.

The first inactive member 40 is a member that does not include a material having electrochemical activity, for example, an electrode active material. The electrode active material is a material that absorbs/desorbs lithium. The first inactive member 40 is a member made of a material other than an electrode active material and used in the relevant technical field.

### [All-solid-state secondary battery]

An all-solid-state secondary battery according to an embodiment includes the above-described cathode; an anode; and an electrolyte layer disposed between the cathode and the anode. The anode includes an anode current collector and a first anode active material layer disposed on one side of the anode current collector.

Referring to FIGS. 1 to 7, the all-solid-state secondary battery 1 includes a cathode 10; an anode 20; and an electrolyte layer 30 disposed between the cathode 10 and the anode 20. The anode 20 includes an anode current collector 21 and a first anode active material layer 22 disposed on one side of the anode current collector 21.

### [Cathode]

Refer to the above-described cathode.

### [Anode]

### [Anode: anode active material]

Referring to FIGS. 1 to 7, the anode 20 includes a first anode active material layer 22. The first anode active material layer 22 includes, for example, an anode active material and a binder.

The anode active material included in the first anode active material layer 22 is, for example, an anode material capable of forming an alloy or compound with lithium.

The anode active material included in the first anode active material layer 22 has, for example, a particle shape. The average particle size of the anode active material having a particle shape is, for example, 4 µm or less, 3 µm or less, 2 µm or less, 1 µm or less, 500 nm or less, 300 nm or less, or 100 nm or less. The average particle size of the anode active material having a particle shape is, for example, 10 nm to 4 µm, 10 nm to 3 µm, 10 nm to 2 µm, 10 nm to 1 µm, 10 nm to 500 nm, 10 nm to 300 nm or 10 nm to 100 nm. Since the anode active material has an average particle size within this range, reversible absorption and/or desorption of lithium may be facilitated during charging and discharging. The average particle size of the anode active material is, for example, a median diameter (D50) measured using a laser particle size distribution meter.

The anode active material included in the first anode active material layer 22 includes, for example, at least one selected from a carbon-based anode active material and a metal or metalloid anode active material.

The carbon-based anode active material includes, for example, amorphous carbon, crystalline carbon, porous carbon, or a combination thereof.

The carbon-based anode active material is, particularly, amorphous carbon. The amorphous carbon may be, but is not limited to, carbon black (CB), acetylene black (AB), furnace black (FB), ketjen black (KB), and graphene, and any material classified as amorphous carbon in the relevant technical field may be used. The amorphous carbon is carbon that has no crystallinity or very low crystallinity and is distinguished from crystalline carbon or graphitic carbon.

The carbon-based anode active material may be, for example, porous carbon. The pore volume of pores included in the porous carbon is, for example, 0.1 cc/g to 10.0 cc/g, 0.5 cc/g to 5 cc/g, or 0.1 cc/g to 1 cc/g. The average pore diameter of pores included in the porous carbon is, for example, 1 nm to 50 nm, 1 nm to 30 nm, or 1 nm to 10 nm. The BET specific surface area of the porous carbon is, for example, 100 m2/g to 3000 m2/g.

The metal or metalloid anode active material includes, but is not necessarily limited to, at least one selected from the group consisting of gold (Au), platinum (Pt), palladium (Pd), silicon (Si), silver (Ag), aluminum (Al), bismuth (Bi), tin (Sn), and zinc (Zn), and any metal or metalloid anode active material that forms an alloy or compound with lithium in the relevant technical field may be used. For example, nickel (Ni) does not form an alloy with lithium and is therefore not a metal anode active material.

The first anode active material layer 22 includes a type of anode active material among these anode active materials or a mixture of a plurality of different anode active materials. For example, the first anode active material layer 22 includes only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first anode active material layer 22 includes a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold, etc., is, for example, 99:1 to 1:99, 10:1 to 1:2, 5:1 to 1:1, or 4:1 to 2:1 by weight ratio, but is not necessarily limited to this range and is selected according to the characteristics of the required all-solid-state secondary battery 1. Since the anode active material has this composition, the cycle characteristics of the all-solid-state secondary battery 1 are further improved.

The anode active material included in the first anode active material layer 22 includes, for example, a mixture of first particles consisting of amorphous carbon and second particles consisting of a metal or metalloid. The metal or metalloid includes, for example, gold (Au), platinum (Pt), palladium (Pd), silicon (Si), silver (Ag), aluminum (Al), bismuth (Bi), tin (Sn), and zinc (Zn). The metalloid, alternatively, is a semiconductor. The content of the second particles is 1 to 99 wt%, 1 to 60 wt%, 8 to 60 wt%, 10 to 50 wt%, 15 to 40 wt%, or 20 to 30 wt% based on the total weight of the mixture. Since the second particles have a content within this range, the cycle characteristics of the all-solid-state secondary battery 1 are further improved.

Alternatively, the first anode active material layer 22 includes a composite anode active material. The composite anode active material may include, for example, a carbon-based support and a metal-based anode active material supported on the carbon-based support. Since the composite anode active material has this structure, the localization of the metal-based anode active material in the first anode active material layer may be prevented, and a uniform distribution may be obtained. As a result, the cycle characteristics of the all-solid-state secondary battery 1 including the first anode active material layer 22 are further improved.

The metal-based anode active material supported on the carbon-based support includes, for example, a metal, a metal oxide, a composite of a metal and a metal oxide, or a combination thereof. The metal includes, for example, gold (Au), platinum (Pt), palladium (Pd), silicon (Si), silver (Ag), aluminum (Al), bismuth (Bi), tin (Sn), tellurium (Te), and zinc (Zn). The metal oxide includes, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of the metal and the metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination of thereof.

The carbon-based support is, for example, amorphous carbon. The amorphous carbon may be, but is not limited to, carbon black (CB), acetylene black (AB), furnace black (FB), ketjen black (KB), graphene, active carbon, carbon nanofibers (CNF), and carbon nanotubes (CNT), and any material classified as amorphous carbon in the relevant technical field may be used. The amorphous carbon is carbon that has no crystallinity or very low crystallinity and is distinguished from crystalline carbon or graphitic carbon. Carbonaceous materials are, for example, carbon-based anode active materials.

The composite anode active material has, for example, a particle shape. The particle size of the composite anode active material having a particle shape is, for example, 10 nm to 4 µm, 10 nm to 1 µm, 10 nm to 500 nm, 10 nm to 200 nm, or 10 nm to 100 nm. Since the composite anode active material has a particle size within this range, reversible absorption and/or desorption of lithium may be facilitated during charging and discharging. The metal-based anode active material supported on the support may have, for example, a particle shape. The particle size of the metal-based anode active material may be, for example, 1 nm to 200 nm, 1 nm to 150 nm, 5 nm to 100 nm, or 10 nm to 50 nm. The carbon-based support may, for example, have a particle shape. The particle size of the carbon-based support may be, for example, 10 nm to 2 µm, 10 nm to 1 µm, 10 nm to 500 nm, 10 nm to 200 nm or 10 nm to 100 nm. Since the carbon-based support has a particle size within this range, it may be more uniformly disposed within the first anode active material layer. The carbon-based support may be, for example, a nanoparticle having a particle size of 500 nm or less. The particle size of the composite anode active material, the particle size of the metal-based anode active material, and the particle size of the carbon-based support are, for example, average particle sizes. The average particle size is, for example, a median diameter (D50) measured using a laser particle size distribution meter. Alternatively, the average particle size may be determined automatically using software from electron microscope images, or may be determined manually by hand.

### [Anode: binder]

The binder included in the first anode active material layer 22 may be, but is not necessarily limited to, for example, styrene-butadiene rubber (SBR), polytetrafluoroethylene, polyvinylidene fluoride, polyethylene, vinylidene fluoride/hexafluoropropylene copolymer, polyacrylonitrile, or polymethyl methacrylate, and any binder used in the relevant technical field may be used. The binder may consist of a single binder or a plurality of different binders.

Since the first anode active material layer 22 includes the binder, the first anode active material layer 22 is stabilized on the anode current collector 21. In addition, cracks of the first anode active material layer 22 are suppressed despite changes in the volume and/or relative position of the first anode active material layer 22 during a charging and discharging process. For example, when the first anode active material layer 22 does not include the binder, it is possible for the first anode active material layer 22 to be easily separated from the anode current collector 21. As the first anode active material layer 22 is detached from the anode current collector 21, the possibility of a short circuit occurring increases when the anode current collector 21 comes into contact with the electrolyte layer 30 at the exposed portion of the anode current collector 21. The first anode active material layer 22 is prepared by, for example, applying a slurry, in which materials constituting the first anode active material layer 22 are dispersed, onto the anode current collector 21 and drying the applied slurry. Stable dispersion of the anode active material in the slurry is possible by including a binder in the first anode active material layer 22. For example, when applying the slurry onto the anode current collector 21 by screen printing, it is possible to suppress the clogging of a screen (e.g., clogging of the anode active material by aggregates).

### [Anode: other additives]

The first anode active material layer 22 may further include additives used in a conventional all-solid-state secondary batteries 1, such as a filler, a coating agent, a dispersant, and an ion conductive aid.

### [Anode: first anode active material layer]

The ratio (B/A) of the initial charge capacity (B) of the first anode active material layer 22 to the initial charge capacity (A) of the cathode active material layer is, for example, 0.005 to 0.45. The initial charge capacity of the cathode active material layer 12 is determined at a maximum charge voltage for Li/Li+ from a 1st open circuit voltage. The initial charge capacity of the first anode active material layer 22 is determined at a voltage of 0.01 V for Li/Li+ from a 2nd open circuit voltage

The maximum charge voltage is determined by the type of a cathode active material. The maximum charge voltage may be, for example, 1.5 V, 2.0 V, 2.5 V, 3.0 V, 3.5 V, 4.0 V, 4.2 V, or 4.3 V. For example, the maximum charge voltage of Li₂S or a Li₂S composite may be 2.5 V for Li/Li+. For example, the maximum charge voltage of Li₂S or a Li₂S composite may be 3.0 V for Li/Li+. The ratio (B/A) of the initial charge capacity (B) of the first anode active material layer 22 to the initial charge capacity (A) of the cathode active material layer is, for example, 0.01 to 0.45, 0.01 to 0.4, 0.01 to 0.3, 0.01 to 0.2, or 0.05 to 0.1. The initial charge capacity (mAh) of the cathode active material layer 12 is obtained by multiplying the charge capacity density (charge specific capacity) (mAh/g) of the cathode active material by the mass (g) of the cathode active material in the cathode active material layer 12. When several types of cathode active materials are used, values of charge capacity density x mass is calculated for all cathode active materials, and the sum of these values is an initial charge capacity of the cathode active material layer 12. The initial charge capacity of the first anode active material layer 22 is also calculated in the same way. The initial charge capacity of the first anode active material layer 22 is obtained by multiplying the charge capacity density (mAh/g) of the anode active material by the mass of the anode active material in the first anode active material layer 22. When several types of anode active materials are used, values of charge capacity density x mass is calculated for all anode active materials, and the sum of these values is an initial charge capacity of the anode active material layer 22. The charge capacity density of each of the cathode active materials and anode active materials may be measured by using an all-solid-state half-cell using lithium metal as a counter electrode.

The initial charge capacity of each of the cathode active material layer 12 and the first anode active material layer 22 may be directly measured using an all-solid-state half-cell at a constant current density of, for example, 0.1 mA/cm2. For the cathode, the measurements may be performed for an operating voltage from the first open circuit voltage (OCV) to the maximum charge voltage, for example, 3.0 V (vs. Li/Li+). For the anode, the measurements may be performed for an operating voltage from the second open circuit voltage (OCV) to a voltage of 0.01 V for the anode, for example, lithium metal. For example, the all-solid-state half-cell having the cathode active material layer may be charged from the first open circuit voltage to 3.0 V with a constant current of 0.1 mA/cm2, and the all-solid-state half-cell having the first anode active material layer may be charged from the second open circuit voltage to 0.01 V with a constant current of 0.1 mA/cm2. The current density during constant current charging may be, for example, 0.2 mA/cm2 or 0.5 mA/cm2 The all-solid-state half-cell having the cathode active material layer may be charged from the first open circuit voltage to 2.5 V, 2.0 V, 2.5 V, 2.8 V, 3.0 V, 3.5 V, or 4.0 V. The maximum charge voltage of the cathode active material layer may be determined by the maximum voltage of the battery satisfying the safety conditions according to JISC8712:2015 of the Japanese Standards Association.

When the initial charge capacity of the first anode active material layer 22 is too small, the thickness of the first anode active material layer 22 becomes very thin, so that lithium dendrites formed between the first anode active material layer 22 and the anode current collector 21 during repeated charging and discharging processes collapse the first anode active material layer 22, thus making it difficult to improve the cycle characteristics of the all-solid-state secondary battery 1. When the charge capacity of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1.

The thickness of the first anode active material layer 22 is, for example, 50% or less, 40% or less, 30% or less, 20% or less, 10% or less, or 5% or less of the thickness of the cathode active material layer 12. The thickness of the first anode active material layer 22 is, for example, 1 to 50 %, 1 to 40 %, 1 to 30 %, 1 to 20 %, 1 to 10 %, or 1 to 5 % of the thickness of the cathode active material layer 12. The thickness of the first anode active material layer 22 is, for example, 1 µm to 20 µm, 2 µm to 15 µm, or 3 µm to 10 µm. When the thickness of the first anode active material layer 22 is too thin, lithium dendrites formed between the first anode active material layer 22 and the anode current collector 21 collapse the first anode active material layer 22, thus making it difficult to improve the cycle characteristics of the all-solid-state secondary battery 1. When the thickness of the first anode active material layer 22 increases excessively, the energy density of the all-solid-state secondary battery 1 decreases and the internal resistance of the all-solid-state secondary battery 1 due to the first anode active material layer 22 increases, thus making it difficult to improve the cycle characteristics of the all-solid-state secondary battery 1. When the thickness of the first anode active material layer 22 decreases, for example, the initial charge capacity of the first anode active material layer 22 also decreases.

### [Anode: second anode active material layer]

Referring to FIG.3, the all-solid-state secondary battery 1 further includes, for example, a second anode active material layer 24 disposed between the anode current collector 21 and the first anode active material layer 22, after being charged. The second anode active material layer 24 is a metal layer including lithium or a lithium alloy. The metal layer includes lithium or a lithium alloy. Therefore, the second anode active material layer is a metal layer including lithium and thus acts as a lithium reservoir. The lithium alloy may be, but is not limited to, a Li-Al alloy, a Li-Sn alloy, a Li-In alloy, a Li-Ag alloy, a Li-Au alloy, a Li-Zn alloy, a Li-Ge alloy, or a Li-Si alloy, and any lithium alloy used in the relevant technical field may be used. The second anode active material layer 24 may be composed of one of these alloys or of lithium, or may be composed of several types of alloys. The second anode active material layer 24 is, for example, a plated layer. The second anode active material layer 24 is deposited between the first anode active material layer 22 and the anode current collector 21 during the charging process of the all-solid-state secondary battery 1.

The thickness of the second anode active material layer 24 is, but is not particularly limited, for example, 1 µm to 500 µm, 1 µm to 200 µm, 1 µm to 150 µm, 1 µm to 100 µm, or 1 µm to 50 µm. When the thickness of the second anode active material layer 24 is too thin, it is difficult for the second anode active material layer 24 to act as a lithium reservoir. When the thickness of the second anode active material layer 24 is too thick, the mass and volume of the all-solid-state secondary battery 1 may increase, and the cycle characteristics of the all-solid-state secondary battery 1 may rather deteriorate.

Alternatively, in the all-solid-state secondary battery 1, the second anode active material layer 24 may be disposed between the anode current collector 21 and the first anode active material layer 22 before assembling the all-solid-state secondary battery 1. When the second anode active material layer 24 is disposed between the anode current collector 21 and the first anode active material layer 22 before assembling the all-solid-state secondary battery 1, the second anode active material layer 24 acts as a lithium reservoir because it is a metal layer including lithium. For example, lithium foil may be disposed between the anode current collector 21 and the first anode active material layer 22 before assembling the all-solid-state secondary battery 1.

When the second anode active material layer 24 is deposited by charging after assembling the all-solid-state secondary battery 1, the energy density of the all-solid-state secondary battery 1 increases because the second anode active material layer 24 is not included during the assembling of the all-solid-state secondary battery 1. When charging the all-solid-state secondary battery 1, the charging is performed in excess of the charge capacity of the first anode active material layer 22. That is, the first anode active material layer 22 is overcharged. During the initial stage of charging, lithium is absorbed into the first anode active material layer 22. The anode active material included in the first anode active material layer 22 forms an alloy or compound with the lithium ions that have moved from the cathode 10. When charging exceeds the capacity of the first anode active material layer 22, for example, lithium is deposited on the back surface of the first anode active material layer 22, that is, between the anode current collector 21 and the first anode active material layer 22, and a metal layer corresponding to the second anode active material layer 24 is formed by the deposited lithium. The second anode active material layer 24 is a metal layer mainly including lithium (i.e., metal lithium). These results are obtained because the anode active material included in the first anode active material layer 22 includes a material that forms an alloy or compound with lithium. During discharging, lithium in the first anode active material layer 22 and the second anode active material layer 24, that is, the metal layer, is ionized and moves toward the cathode 10. Therefore, it is possible to use lithium as an anode active material in the all-solid-state secondary battery 1. In addition, since the first anode active material layer 22 covers the second anode active material layer 24, it acts as a protective layer for the second anode active material layer 24, that is, the metal layer, and at the same time, serves to suppress the deposition and growth of lithium dendrites. Therefore, the short circuit and capacity reduction of the all-solid-state secondary battery 1 are suppressed, and as a result, the cycle characteristics of the all-solid-state secondary battery 1 are improved. In addition, when the second anode active material layer 24 is disposed by charging after assembling the all-solid-state secondary battery 1, the anode 20, that is, the anode current collector 21 and the first anode active material layer 22, and the region therebetween, are Li-free regions that do not include lithium (Li) in the initial state of the all-solid-state secondary battery 1 or in the state after complete discharging.

### [Anode: anode current collector]

The anode current collector 21 is composed of, for example, a material that does not react with lithium, that is, does not form both an alloy and a compound. Examples of the material constituting the anode current collector 21 include, but are not necessarily limited to, copper (Cu), stainless steel, titanium (Ti), iron (Fe), cobalt (Co), and nickel (Ni), and any material that may be used as an electrode collector in the relevant technical field may be used. The anode current collector 21 may be composed of one of the above-described metals, or may be composed of an alloy or coating material of two or more of the above-described metals. The anode current collector 21 has, for example, a shape of a plate or a foil.

Referring to FIG. 2, the all-solid-state secondary battery 1 may further include, for example, a thin film 23 including an element capable of forming an alloy with lithium on one surface of the anode current collector 21. The thin film 23 is disposed between the anode current collector 21 and the first anode active material layer 22. The thin film 23 includes, for example, an element capable of forming an alloy with lithium. The element capable of forming an alloy with lithium may be, but is not necessarily limited to, gold, silver, zinc, tin, indium, silicon, aluminum, or bismuth, and any element capable of forming an alloy with lithium in the relevant technical field may be used. The thin film 23 may be composed of one of these metals or may composed of an alloy of several types of metals. Since the thin film 23 is disposed on one surface of the anode current collector 21, for example, the deposition shape of the second anode active material layer 24 deposited between the thin film 23 and the first anode active material layer 22 becomes flatter, and thus the cycle characteristics of the all-solid-state secondary battery 1 may be further improved.

The thickness of the thin film 23 is, for example, 1 nm to 800 nm, 10 nm to 700 nm, 50 nm to 600 nm, or 100 nm to 500 nm. When the thickness of the thin film 23 is less than 1 nm, it may be difficult for the thin film 23 to perform its function. When the thickness of the thin film 23 is too thick, the thin film 23 itself absorbs lithium, so that the deposition amount of lithium in the anode may be reduced, the energy density of the all-solid-state battery may be reduced, and the cycle characteristics of the all-solid-state secondary battery 1 may be deteriorated. The thin film 23 may be formed on the anode current collector 21 by, for example, a vacuum deposition method, a sputtering method, a plating method, or the like, but the disclosure is not necessarily limited to these methods, and any method capable of forming the thin film 23 in the relevant technical field is possible.

Although not shown in the drawings, the anode current collector 21 may include, for example, a base film and a metal layer disposed on one or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Since the base film includes an insulating thermoplastic polymer, when a short circuit occurs, the base film softens or liquefies, thereby blocking battery operation and suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more specific details on the base film, metal layer, metal chip, and lead tab of the anode current collector 21, refer to the above-described cathode current collector 11. Since the anode current collector 21 has this structure, the weight of the anode may be reduced, and as a result, the energy density of the anode and the lithium battery may be improved.

### [Anode: second inactive member]

Referring to FIGS. 6 and 7, the all-solid-state secondary battery 1 further includes a second inactive member 50 disposed on the other side of the anode current collector 21.

The second inactive member 50 is distinguished from the first inactive member 40 in that it has conductivity by additionally including a conductive material. The second inactive member 50 is, for example, a conductive flame-retardant inactive member.

The conductive material is, for example, graphite, carbon black, acetylene black, ketjen black, denka black, carbon fiber, carbon nanotube (CNT), graphene, metal fiber, metal powder, or the like. The electronic conductivity of the second inactive member 50 at 25°C and 1 atm is, for example, 100 times or more, 1000 times or more, or 10000 times or more of the electronic conductivity of the first inactive member 40 at 25°C and 1 atm.

The second inactive member 50 includes, for example, a matrix, a filler, and a conductive material. The matrix includes, for example, a substrate and a stiffener. The second inactive member 50 may further include a filler, binder, or the like. The content of the conductive material included in the second inactive member 50 is, for example, 1 to 30 parts by weight, 1 to 20 parts by weight, 1 to 15 parts by weight, 1 to 10 parts by weight, 5 to 40 parts by weight, 5 to 30 parts by weight, or 5 to 35 parts by weight, based on 100 parts by weight of the second inactive member 50.

The elastic modulus (Young's modulus) of the second inactive member 50 is smaller than, for example, the elastic modulus of the anode current collector 21. The elastic modulus (Young's modulus) of the second inactive member 50 is, for example, 50% or less, 30% or less, 10% or less, or 5% or less of the elastic modulus of the anode current collector 21. The elastic modulus (Young's modulus) of the second inactive member 50 is, for example, 0.01% to 50%, 0.1% to 30%, 0.1% to 10%, and 1% to 5% of the elastic modulus of the anode current collector 21. The elastic modulus of the second inactive member 50 is, for example, 100 MPa or less, 50 MPa or less, 30 MPa or less, 10 MPa or less, or 5 MPa or less. The elastic modulus of the second inactive member 50 is, for example, 0.01 to 100 MPa, 0.1 to 50 MPa, 0.1 to 30 MPa, 0.1 to 10 MPa, or 1 to 5 MPa. The elastic modulus may be measured using, for example, a dynamic mechanical analyzer (DMA).

Since the second inactive member 50, 50a, or 50b has conductivity, it may act as the anode current collector 21. In addition, since the second inactive member 50 has a lower elastic modulus than the anode current collector 21, it may more effectively accommodate a volume change of the anode 20 during the charging and discharging of the all-solid-state secondary battery 1. As a result, the second inactive member 50 may effectively relieve internal stress caused by a volume change of the all-solid-state secondary battery 1 during the charging and discharging of the all-solid-state secondary battery 1, thereby improving the cycle characteristics of the all-solid-state secondary battery 1.

The shape of the second inactive member 50 is not particularly limited, and may be selected according to the shape of the all-solid-state secondary battery 1. The second inactive member 50 may have, for example, a shape of a sheet, a rod, or a gasket. The second inactive member 50 may be disposed on one side or both sides of one all-solid-state secondary battery 1. The second inactive member 50 may be disposed, for example, between a plurality of stacked all-solid-state secondary batteries 1. The second inactive member 50 may be disposed, for example, between each of the stacked all-solid-state secondary batteries 1, on the uppermost side thereof, and/or on the lowermost side thereof.

### [Electrolyte layer]

### [Electrolyte layer: electrolyte]

Referring to FIGS. 1 to 7, the electrolyte layer 30 includes a solid electrolyte disposed between the cathode 10 and the anode 20. The electrolyte layer may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte is, for example, a sulfide-based solid electrolyte. The sulfide-based solid electrolyte may be selected from the above-described sulfide-based solid electrolytes used in the protective layer.

The oxide-based solid electrolytes may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr, 0≤x≤10), or a combination thereof. The oxide-based solid electrolyte is prepared, for example, by a sintering method or the like.

The oxide-based solid electrolyte is, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 0<a<2, 0≤x≤10).

The polymer solid electrolyte may be selected from the polymer solid electrolytes used in the composite cathode active material.

The gel electrolyte is, for example, a gel polymer electrolyte. The gel electrolyte may have a gel state without including a polymer.

The polymer gel electrolyte may be selected from the polymer gel electrolytes used in the composite cathode active material.

### [Electrolyte layer: binder]

The electrolyte layer 30 may include, for example, a binder. The binder included in the electrolyte layer 30 may be, but is not limited to, styrene butadiene rubber (SBR), polytetrafluoroethylene, polyvinylidene fluoride, or polyethylene, and any binder used in the relevant technical field may be used. The binder of the electrolyte layer 30 may be the same as or different from the binder included in the cathode active material layer 12 and the anode active material layer 22. The binder may be omitted.

The content of the binder included in the electrolyte layer 30 is 0.1 to 10 wt%, 0.1 to 5 wt%, 0.1 to 3 wt%, 0.1 to 1 wt%, 0 to 0.5 wt%, or 0 to 0.1 wt% with respect to the total weight of the electrolyte layer 30.

### Mode for the Invention

Hereinafter, the present inventive concept will be described in more detail through examples and comparative examples. However, these examples are intended to illustrate the present inventive concept, and the scope of the present inventive concept is not limited to these examples.

### (Preparation of composite cathode active material)

### Preparation Example 1: Li₂S-LiI-CNF composite

Li₂S and LiI were mixed at a weight ratio of 30:20. The mixture was mechanically milled using a ball mill to prepare a Li₂S-LiI composite. Milling conditions were 25 °C, 600 rpm for 10 hours.

The Li₂S-LiI composite and carbon nanofibers (CNF) were mixed at a weight ratio of 50:10. The mixture was mechanically milled using a ball mill to prepare a Li₂S-LiI-CNF composite. Milling conditions were 25 °C, 600 rpm for 6 hours.

The Li₂S-LiI-CNF composite was used as a composite cathode active material.

### (Manufacturing of cathode and all-soli-state secondary battery)

### Example 1: Protective layer (LiFePO₄: Li₆PS₅Cl: binder = 90: 5: 5; 3 µm)/cathode active material layer/carbon layer (2 µm)/Al

### (Manufacturing of cathode)

The Li₂S-LiI-CNF composite prepared in Example 1 was prepared as a dry cathode active material. Li₆PS₅Cl, an argyrodite-type crystal (D50 = 1.0 µm, crystalline), was prepared as a dry second sulfide-based solid electrolyte. PTFE was prepared as a dry binder. The dry cathode active material and the dry solid electrolyte were prepared at a weight ratio of 60:39, put into a blade mixer, and then mixed for 2 minutes to prepare a first mixture.

The first mixture and the dry binder were prepared at a weight ratio of 99:1, put into a blade mixer, and then mixed for 20 seconds to prepare a second mixture.

The second mixture was further mixed using a kneader, and then passed through calender rolls to prepare a dry cathode sheet self-standing film having a thickness of about 100 µm.

The prepared cathode sheet self-standing film was disposed on an aluminum current collector coated with a carbon layer, and plate-pressed for 10 minutes under constant pressure to prepare a cathode active material layer/carbon layer/cathode current collector laminate.

A mixture, in which LiFePO₄ (D50 = 1 µm) as an oxide-based cathode active material, Li₆PS₅Cl (D50 = 0.5 µm, crystalline) which is an argyrodite-type crystal as a first sulfide-based solid electrolyte, and an acrylic binder are mixed at a weight ratio of 90:5:5, was stirred while adding octyl acetate to the mixture, thereby preparing a slurry.

The slurry was applied onto the laminate by bar coating, dried at room temperature, and then further dried in vacuum at 120°C to introduce a protective layer onto the cathode active material layer.

The thickness of the cathode was about 120 µm. The thickness of the cathode active material layer was about 100 µm, the thickness of the protective layer was about 3 µm, the thickness of the carbon layer was about 2 µm, and the thickness of the aluminum foil was about 15 µm.

The area of the cathode active material layer was equal to the area of the cathode current collector.

### (Manufacturing of anode)

A SUS foil having a thickness of 10 µm was prepared as an anode current collector. Carbon black (CB) having a primary particle diameter of about 30 nm and silver (Ag) particles having an average particle diameter of about 60 nm were prepared as an anode active material.

4 g of a mixed powder containing CB and Ag particles at a weight ratio of 3:1 was put into a container, and 4 g of an NMP solution containing 7 wt% of PVDF binder (#9300 from Kureha Co., Ltd.) was added thereto to prepare a mixed solution. The prepared mixed solution was stirred while adding NMP dropwise to this mixed solution, thereby preparing a slurry. The prepared slurry was applied onto a SUS sheet using a bar coater, dried in air at 80 °C for 10 minutes, and then vacuum-dried at 40 °C for 10 hours to prepare a laminate. The prepared laminate was cold-roll-pressed to flatten the surface thereof to prepare an anode having a first anode active material layer/anode current collector structure. The thickness of the first anode active material layer was about 15 µm. The area of the first anode active material layer was equal to the area of the anode current collector.

### (Manufacturing of solid electrolyte layer)

1.5 parts by weight of an acrylic binder was added to 98.5 parts by weight of a solid electrolyte, Li₆PS₅Cl, which is an argyrodite-type crystal (D₅₀=3.0 µm, crystalline), to prepare a mixture. The prepared mixture was stirred while adding NMP dropwise to this mixture, thereby preparing a slurry. The prepared slurry was applied onto a 15 µm thick nonwoven fabric placed on a 75 µm thick PET substrate using a bar coater, and dried in air at 80 °C for 10 minutes to prepare a laminate. The prepared laminate was vacuum-dried at 80 °C for 2 hours to manufacture a solid electrolyte layer.

### (Inactive member)

A flame-retardant inactive member was manufactured by forming a slurry containing pulp fiber (cellulose fiber), glass fiber, aluminum hydroxide (Al(OH)₃), an acrylic binder, and a solvent into a gasket shape and then removing the solvent.

The weight ratio of pulp fiber (cellulose fiber), glass fiber, aluminum hydroxide (Al(OH)₃), and acrylic binder was 20:8:70:2. The thickness of the inactive member was 120 µm.

Before placing the manufactured flame-retardant inactive member on a solid electrolyte layer, moisture, or the like was removed from the flame-retardant inactive member by vacuum heat treatment at 80 °C for 5 hours.

### (Manufacturing of all-solid-state secondary battery)

Referring to FIG. 4, a solid electrolyte layer was disposed on an anode so that a first anode active material layer was in contact with the solid electrolyte layer, and a cathode was disposed on the solid electrolyte layer. A gasket surrounding the cathode and in contact with the solid electrolyte layer was disposed around the cathode to prepare a laminate. The thickness of the gasket was about 120 µm. The above-described flame retardant inactive member was used as the gasket. The gasket is disposed so as to be in contact with the side surface of the cathode and the solid electrolyte layer. The cathode is disposed at the center of the solid electrolyte layer, and the gasket surrounds the cathode and extends to the end of the solid electrolyte layer. The area of the cathode was about 90% of the area of the solid electrolyte layer, and the gasket was disposed over the entire remaining 10% area of the solid electrolyte layer where the cathode was not disposed.

The prepared laminate was plate-pressed by a pressure of 500 MPa at 85 °C for 30 min. By this pressing treatment, the solid electrolyte layer is sintered, thereby improving battery characteristics. The thickness of the sintered solid electrolyte layer was about 45 µm. The density of the Li₆PS₅Cl solid electrolyte, which is an argyrodite-type crystal, included in the sintered solid electrolyte layer, was 1.6 g/cc. The area of the solid electrolyte layer was equal to the area of the anode.

The pressed laminate was disposed in a pouch and sealed in vacuum to manufacture an all-solid-state secondary battery. A portion of the cathode current collector and a portion of the anode current collector were extended outside the sealed battery, and were used as a cathode terminal and an anode terminal.

### Example 2: Protective layer (LiFePO₄: Li₆PS₅Cl: binder = 95: 3: 2; 3 µm)/cathode active material layer/carbon layer (2 µm)/Al

A cathode and an all-solid-state secondary battery were manufactured in the same manner as in Example 1, except that the weight ratio of LiFePO₄, Li₆PS₅Cl, and an acrylic binder was changed to 95: 3: 2 when manufacturing the protective layer.

### Example 3: Protective layer (LiFePO₄: Li₆PS₅Cl: binder = 98: 1: 1; 3 µm)/cathode active material layer/carbon layer (2 µm)/Al

A cathode and an all-solid-state secondary battery were manufactured in the same manner as in Example 1, except that the weight ratio of LiFePO₄, Li₆PS₅Cl, and an acrylic binder was changed to 98: 1: 1 when manufacturing the protective layer.

### Example 4: Protective layer (LiFePO₄: Li₆PS₅Cl: binder = 80: 15: 5; 3 µm)/cathode active material layer/carbon layer (2 µm)/Al

A cathode and an all-solid-state secondary battery were manufactured in the same manner as in Example 1, except that the weight ratio of LiFePO₄, Li₆PS₅Cl, and an acrylic binder was changed to 80: 15: 5 when manufacturing the protective layer.

### Reference Example 1: Protective layer (LiFePO₄: Li₆PS₅Cl: binder = 99: 0: 1; 3 µm)/cathode active material layer/carbon layer (2 µm)/Al

A cathode and an all-solid-state secondary battery were manufactured in the same manner as in Example 1, except that the weight ratio of LiFePO₄, Li₆PS₅Cl, and an acrylic binder was changed to 99: 0: 1; 3 when manufacturing the protective layer.

A sulfide-based solid electrolyte was not used.

### Comparative Example 1: Cathode active material layer/Al

A cathode and an all-solid-state secondary battery were manufactured in the same manner as in Example 1, except that a protective layer was not introduced.

The cathode had a cathode active material layer/aluminum foil structure. The thickness of the cathode active material layer was about 100 µm. The thickness of the cathode was about 115 µm.

### Comparative Example 2: Cathode active material layer/Carbon layer (2 µm)/Al

A cathode and an all-solid-state secondary battery were manufactured in the same manner as in Example 1, except that an aluminum foil coated with a carbon layer was used as a cathode current collector without introducing a protective layer.

The cathode had a cathode active material layer/carbon layer/aluminum foil structure. The thickness of the carbon layer was about 2 µm. The thickness of the cathode active material layer was about 100 µm. The thickness of the cathode was about 117 µm.

### Example 5: Protective layer (LiMn₂O₄: Li₆PS₅Cl: binder = 90: 5: 5; 3 µm)/cathode active material layer/carbon layer (2 µm))/Al

A cathode and an all-solid-state secondary battery were prepared in the same manner as in Example 1, except that LiMn₂O₄ was used instead of LiFePO₄ as a cathode active material.

### Example 6: Protective layer (LiMn₂O₄: Li₆PS₅Cl: binder = 95: 3: 2; 3 µm)/cathode active material layer/carbon layer (2 µm))/Al

A cathode and an all-solid-state secondary battery were prepared in the same manner as in Example 2, except that LiMn₂O₄ was used instead of LiFePO₄ as a cathode active material.

### Example 7: Protective layer (LiMn₂O₄: Li₆PS₅Cl: binder = 98: 1: 1; 3 µm)/cathode active material layer/carbon layer (2 µm))/Al

A cathode and an all-solid-state secondary battery were prepared in the same manner as in Example 3, except that LiMn₂O₄ was used instead of LiFePO₄ as a cathode active material.

### Example 8: Protective layer (LiMn₂O₄: Li₆PS₅Cl: binder = 80: 15: 5; 3 µm)/cathode active material layer/carbon layer (2 µm))/Al

A cathode and an all-solid-state secondary battery were prepared in the same manner as in Example 4, except that LiMn₂O₄ was used instead of LiFePO₄ as a cathode active material.

### Reference Example 2: Protective layer (LiMn₂O₄: Li₆PS₅Cl: binder = 99: 0: 1; 3 µm)/cathode active material layer/carbon layer (2 µm))/Al

A cathode and an all-solid-state secondary battery were prepared in the same manner as in Reference Example 1, except that LiMn₂O₄ was used instead of LiFePO₄ as a cathode active material.

A sulfide-based solid electrolyte was not used.

### Evaluation Example 1: XRD analysis and scanning electron microscopy analysis

XRD spectra were measured using Cu Kα radiation for the bare Li₂S used in Preparation Example 1, pulverized Li₂S, the Li₂S-LiI composite prepared in the first step of Preparation Example 1, and the Li₂S-LiI-CNF composite prepared in Preparation Example 1.

Some of the measurement results are shown in Table 1 below and FIG. 1. The Li₂S crystallite size and lattice constant were derived from the first peak for the (111) crystal plane appearing at a diffraction angle of 2θ = 27°± 2.0° in the XRD spectra.

The pulverized Li₂S was prepared by milling under the same conditions, except that in the first step of Example 1, the mixture of Li₂S and LiI with a weight ratio of 30: 20 was changed to 50 parts by weight of Li₂S.

For the bare Li₂S used in Preparation Example 1, pulverized Li₂S, and the Li₂S-LiI-CNF composite prepared in Preparation Example 1, the particle sizes (D50 particle size and D10 particle size) of the composite were measured using a laser particle size analyzer (PSA).

Scanning electron microscope images of the bare Li₂S used in Preparation Example 1 and the Li₂S-LiI-CNF composite prepared in Preparation Example 1 are shown in FIGS. 2A and 2B, respectively.

The sizes of Li₂S particles in the Li₂S-LiI-CNF composite were measured using a scanning electron microscope. The measurement results are shown in Table 1 below.

**[Table 1]**

| | Li₂S crystallite size [nm] | Li₂S particle size [µm] |
|---|---|---|
| bare Li₂S | 65 | 8 |
| Pulverized Li₂S | 15 | - |
| Li₂S-LiI-CNF composite | less than 10 | less than 1 |

As shown in Table 1, the Li₂S particle size and Li₂S crystallite size of the Li₂S-LiI-CNF composite were significantly reduced compared to bare Li₂S.

Although not shown in Table 1, the lattice constant of the Li₂S-LiI-CNF composite of Preparation Example 1 was larger than the lattice constant of bare Li₂S. An increase in the lattice constant of the Li₂S-LiI composite compared to the lattice constant of bare Li₂S was determined to be due to the dissolution of LiI within the Li₂S crystal. Therefore, it was confirmed that the Li₂S-LiI composite forms a solid solution in the Li₂S-LiI-CNF composite.

The D50 particle size of the composite prepared in Preparation Example 1 was about 5 µm, and the D10 particle size thereof was about 1 µm or more.

### Evaluation Example 2: Charge-discharge test

The charge-discharge characteristics of the all-solid-state secondary batteries manufactured in Examples 1 to 8, Reference Examples 1 and 2, and Comparative Examples 1 and 2 were evaluated by the following charge-discharge test. A charge-discharge test was performed by putting the all-solid-state secondary battery into a constant temperature chamber at 45°C.

In the first cycle, the all-solid-state secondary battery was charged with a constant current of 0.1 C for 20 hours until a battery voltage reached 2.5 V. Subsequently, the all-solid-state secondary battery was discharged with a constant current of 0.05 C for 20 hours until the battery voltage reached 0.3 V.

The discharge capacity in the first cycle was taken as standard capacity. The standard capacity is expressed as specific capacity of composite cathode active material in Table 2 below.

After the second cycle, the all-solid-state secondary battery was charged and discharged up to 30 cycles under the same conditions as the first cycle. Some of the evaluation results are shown in Table 2 below.

The number of cycles refers to the number of cycles required for the discharge capacity to decrease to 80% of the standard capacity after the second cycle. It was considered that as the number of cycles increases, the all-solid-state battery has better lifespan characteristics.

### Initial efficiency is expressed by Equation 1 below.

<Equation 1> 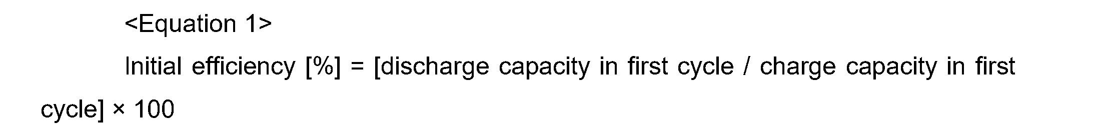 Initial efficiency [%] = [discharge capacity in first cycle / charge capacity in first cycle] × 100

### Evaluation Example 3: Evaluation of high-rate characteristics

The high-rate characteristics of the all-solid-state secondary batteries manufactured in Examples 1 to 8, Reference Examples 1 and 2, and Comparative Examples 1 and 2 were evaluated by the following charge-discharge test. A charge-discharge test was performed by putting the all-solid-state secondary battery into a constant temperature chamber at 45°C.

Each of the all-solid-state secondary batteries manufactured in Examples 1 to 8, Reference Examples 1 and 2, and Comparative Examples 1 and 2 was charged with a constant current of 0.1 C rate at 45°C until a voltage reached 2.5 V (vs. Li), and was then cut-off at a current of 0.05 C rate while maintaining 2.5 V in constant voltage mode. Subsequently, the all-solid-state secondary battery was discharged with a constant current of 0.1 C rate until the voltage reached 0.3 V (vs. Li) during discharging (formation cycle).

The all-solid-state secondary battery having undergone the formation cycle was charged with a constant current of 0.2 C rate at 45°C until the voltage reached 2.5 V (vs. Li). Subsequently, the all-solid-state secondary battery was discharged with a constant current of 0.2 C rate until the voltage reached 0.3 V (vs. Li) during discharging (first cycle).

The all-solid-state secondary battery having undergone the first cycle was charged with a constant current of 0.2 C rate at 45°C until the voltage reached 2.5 V (vs. Li). Subsequently, the all-solid-state secondary battery was discharged with a constant current of 0.05 C rate until the voltage reached 0.3 V (vs. Li) during discharging (second cycle).

The all-solid-state secondary battery having undergone the second cycle was charged with a constant current of 0.2 C rate at 45°C until the voltage reached 2.5 V (vs. Li). Subsequently, the all-solid-state secondary battery was discharged with a constant current of 0.5 C rate until the voltage reached 0.3 V (vs. Li) during discharging (third cycle).

The all-solid-state secondary battery having undergone the third cycle was charged with a constant current of 0.2 C rate at 45°C until the voltage reached 2.5 V (vs. Li). Subsequently, the all-solid-state secondary battery was discharged with a constant current of 1.0 C rate until the voltage reached 0.3 V (vs. Li) during discharging (fourth cycle).

In every charge-discharge cycle, a 10-minute pause was provided after each charge-discharge cycle. Some of the evaluation results are shown in Table 2 below. High-rate characteristic is defined by Equation 2 below. <Equation 2> 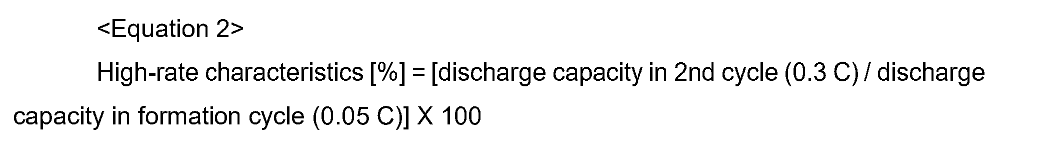 High-rate characteristics [%] = [discharge capacity in 2nd cycle (0.3 C)/discharge capacity in formation cycle (0.05 C)] × 100

**[Table 2]**

| | Initial efficiency [%] | Specific capacity [mAh/g] | Number of cycles [times] | High-rate characteristics [%] |
|---|---|---|---|---|
| Example 1: Protective layer (LiFePO₄: Li₆PS₅Cl: binder = 90: 5: 5; 3 µm)/cathode active material layer/carbon layer (2 µm)/Al | 81.2 | 802 | 180 | 84.5 |
| Example 2: Protective layer (LiFePO₄: Li₆PS₅Cl: binder = 95: 3: 2; 3 µm)/cathode active material layer/carbon layer (2 µm)/Al | 80.9 | 789 | 170 | 83.5 |
| Example 3: Protective layer (LiFePO₄: Li₆PS₅Cl: binder = 98: 1: 1; 3 µm)/cathode active material layer/carbon layer (2 µm)/Al | 78.8 | 785 | 120 | 82.5 |
| Example 4: Protective layer (LiFePO₄: Li₆PS₅Cl: binder = 80: 15: 5; 3 µm)/cathode active material layer/carbon layer (2 µm)/Al | 84.6 | 905 | 280 | 86.2 |
| Reference Example 1: Protective layer (LiFePO₄: Li₆PS₅Cl: binder = 99: 0: 1; 3 µm)/cathode active material layer/carbon layer (2 µm)/Al | 75.6 | 722 | 85 | 80.7 |
| Comparative Example 1: Cathode active material layer/Al | 72.6 | 709 | 15 | 80.5 |
| Comparative Example 2: Cathode active material layer/carbon layer (2 µm)/Al | 77.8 | 780 | 100 | 81.5 |

As shown in Table 2, the all-solid-state secondary batteries of Examples 1 to 4 exhibited improved charge-discharge characteristics compared to the all-solid-state secondary batteries of Reference Example 1 and Comparative Examples 1 and 2.

The all-solid-state secondary batteries of Examples 1 to 4 had improved charge-discharge characteristics due to increased adhesion between the cathode active material layer and the electrolyte layer and decreased interfacial resistance therebetween by introducing a protective layer.

The all-solid-state secondary battery of Reference Example 1 had relatively deteriorated charge-discharge characteristics compared to the all-solid-state secondary batteries of Examples 1 to 4 due to increased interfacial resistance caused by introducing a protective layer that does not contain a solid electrolyte.

Although not shown in Table 2, the all-solid-state secondary batteries of Examples 5 to 8 also exhibited improved charge-discharge characteristics compared to the all-solid-state secondary batteries of Reference Example 2 and Comparative Examples 1 and 2.

Although not shown in the drawings, it was confirmed that a lithium metal layer, which is a second anode active material layer, is formed between the first anode active material layer and the anode current collector after initial charging in the all-solid-state secondary batteries of Examples 1 to 8 and Reference Examples 1 and 2.

The formation of the lithium metal layer was confirmed through scanning electron microscope images of the cross-section of the all-solid-state secondary battery.

### Evaluation Example 4: Evaluation of thermal stability

For the all-solid-state secondary batteries manufactured in Examples 1 to 8, Reference Examples 1 and 2, and Comparative Examples 1 and 2, penetration tests were performed

The penetration test was performed by charging the all-solid-state secondary battery to 2.5 V with a current of 0.5 C for 2 hours, stopping for about 10 minutes, and then completely penetrating the center of this all-solid-state secondary battery at a speed of 60 mm/sec using a pin having a diameter of 5 mm. Based on whether ignition occurred after penetration, all-solid-state secondary batteries that did not ignite were expressed as ○, and all-solid-state secondary batteries that ignited were expressed as x. Some of the evaluation results are shown in Table 3 below.

The temperature change of the all-solid-state secondary battery was measured for 48 hours after penetration to determine the maximum exothermic temperature.

**[Table 3]**

| | Thermal stability |
|---|---|
| Example 1: Protective layer (LiFePO₄: Li₆PS₅Cl: binder = 90: 5: 5; 3 µm)/cathode active material layer/carbon layer (2 µm)/Al | ○ |
| Example 2: Protective layer (LiFePO₄: Li₆PS₅Cl: binder = 95: 3: 2; 3 µm)/cathode active material layer/carbon layer (2 µm)/Al | ○ |
| Example 3: Protective layer (LiFePO₄: Li₆PS₅Cl: binder = 98: 1: 1; 3 µm)/cathode active material layer/carbon layer (2 µm)/Al | ○ |
| Example 4: Protective layer (LiFePO₄: Li₆PS₅Cl: binder = 80: 15: 5; 3 µm)/cathode active material layer/carbon layer (2 µm)/Al | ○ |
| Reference Example 1: Protective layer (LiFePO₄: Li₆PS₅Cl: binder = 95: 0: 5; 3 µm)/cathode active material layer/carbon layer (2 µm)/Al | ○ |
| Comparative Example 1: Cathode active material layer/Al | x |
| Comparative Example 2: Cathode active material layer/carbon layer (2 µm)/Al | x |

As shown in Table 3, the thermal stability of the all-solid-state secondary batteries of Examples 1 to 4 was improved compared to the all-solid-state secondary batteries of Comparative Examples 1 to 2.

The thermal stability of the all-solid-state secondary batteries of Examples 1 to 4 was improved by introducing a protective layer.

Although not shown in Table 3, the relative heights of the maximum exothermic temperatures of the all-solid-state secondary batteries of Examples 1 to 4, Reference Example 1, and Comparative Examples 1 to 2 are as follows: Comparative Example 1 ≒ Comparative Example 2 >> Example 4 > Reference Example 1 ≒ Examples 1 to 3.

The all-solid-state secondary batteries of Comparative Examples 1 and 2 did not include a protective layer, so the maximum exothermic temperatures thereof were significantly increased compared to those of the all-solid-state secondary batteries of Examples 1 to 4 and Reference Example 1.

The content of an oxide-based cathode active material in the all-solid-state secondary battery of Example 1 was relatively decreased, so the maximum exothermic temperature thereof was relatively increased compared to those of the all-solid-state secondary batteries of Examples 1 to 3 and Reference Example 1.

Although not shown in Table 3, the all-solid-state secondary batteries of Examples 5 to 8 also exhibited improved thermal stability compared to the all-solid-state secondary batteries of Reference Example 2 and Comparative Examples 1 to 2, and the maximum exothermic temperature thereof also showed the same relative trend.

| | | | |
|---|---|---|---|
| 1 | all-solid-state secondary battery | 10 | cathode |
| 11 | cathode current collector | 12 | cathode active material layer |
| 13 | protective layer | 20 | anode |
| 21 | anode current collector | 22 | first anode active material layer |
| 23 | thin film | 24 | second anode active material layer |
| 30 | electrolyte layer | 40 | first inactive member |
| 50 | second inactive member | | |

### Industrial Applicability

According to an aspect, it is possible to provide a cathode having both improved charge/discharge characteristics and thermal stability by introducing a protective layer containing an oxide-based cathode active material between a cathode active material layer containing a sulfide-based cathode electrode active material and a cathode current collector and to provide an all-solid-state secondary battery including the cathode.

## Claims

1. A cathode comprising: a cathode current collector; a cathode active material layer; and a protective layer on the cathode active material layer, wherein the protective layer includes an oxide-based cathode active material and a first sulfide-based solid electrolyte,
the cathode active material layer incudes a sulfide-based composite cathode active material and a second sulfide-based solid electrolyte,
the composite cathode active material includes a composite of Li₂S, a first ionic compound, and a first carbon-based material, and
the oxide-based cathode active material has an olivine structure or a spinel structure.

2. The cathode of claim 1, wherein the oxide-based cathode active material includes a lithium transition metal oxide represented by Formuas 1 to 4 below:
<Formula 1> LiₐM1ₓM2_{y}PO_{4-b}X_{b}
wherein, in Formula 1, 0.90≤a≤1.1, 0≤x≤0.9, 0≤y≤0.5, 0.9<x+y<1.1, and 0≤b≤2,
M1 is chromium (Cr), manganese (Mn), iron (Fe), cobalt (Co), nickel (Ni), copper (Cu), zirconium (Zr), or a combination thereof,
M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and
X is O, F, S, P or a combination thereof,
<Formula 2> LiₐM3_{z}PO₄
wherein, in Formula 2, 0.90≤a≤1.1 and 0.9≤z≤1.1, and
M3 is chromium (Cr), manganese (Mn), iron (Fe), cobalt (Co), nickel (Ni), copper (Cu), zirconium (Zr), or a combination thereof,
<Formula 3> LiₐMn₂₋ₓM4ₓO_{4-b}X_{b}
<Formula 4> LiₐCo₂₋ₓM5ₓO_{4-b}X_{b}
wherein, in Formulas 3 and 4, 0.90≤a≤1.1, 0≤x≤0.9, and 0≤b≤2,
M4 and M5 are each independently magnesium (Mg), calcium (Ca), strontium (Sr), barium (Ba), titanium (Ti), zirconium (Zr), niobium (Nb), molybdenum (Mo), tungsten (W), aluminum (Al), silicon (Si), nickel (Ni), manganese (Mn), chromium (Cr), iron (Fe), magnesium (Mg), scandium (Sc), vanadium (V), scandium (Sc), yttrium (Y), or a combination thereof, and
X is O, F, S, P, or a combination thereof.

3. The cathode of claim 1, wherein a content of the oxide-based cathode active material is 80 wt% or more of a total weight of the protective layer.

4. The cathode of claim 1, wherein the first sulfide-based solid electrolyte and the second sulfide-based solid electrolyte are each independently at least one selected from Li₂S-P₂S₅, Li₂S-P₂S₅-LiX (X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is one of Ge, Zn, and Ga), Li₂S-GeS₂, Li₂S-SiS₂-Li₃PO₄, Li₂S-SiS₂-LiₚMO_{q} (p and q are positive numbers, M is one of P, Si, Ge, B, Al, Ga, and In), Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2),
the first sulfide-based solid electrolyte, the second sulfide-based solid electrolyte, or a combination thereof includes an argyrodite-type solid electrolyte,
the argyrodite-type solid electrolyte includes at least one selected from Li₆PS₅Cl, Li₆PS₅Br, and Li₆PS₅I, and
the argyrodite-type solid electrolyte has a density of 1.5 to 2.0 g/cc.

5. The cathode of claim 1, wherein a size of the first sulfide-based solid electrolyte is smaller than a size of the second sulfide-based solid electrolyte, and
the size of the first sulfide-based solid electrolyte is 90% or less of the size of the second sulfide-based solid electrolyte.

6. The cathode of claim 1, wherein a thickness of the protective layer is smaller than a thickness of the cathode active material layer,
the thickness of the protective layer is 20% or less of the thickness of the cathode active material layer, and
the thickness of the protective layer is 10 µm or less.

7. The cathode of claim 1, wherein the protective layer further includes a binder, and
80 to 99 parts by weight of the oxide-based anode active material, 1 to 10 parts by weight of the first sulfide-based solid electrolyte, and 1 to 10 parts by weight of the binder are included based on 100 parts by weight of the protective layer.

8. The cathode of claim 1, further comprising a carbon layer between the cathode current collector and the cathode active material layer,
wherein a thickness of the carbon layer is smaller than a thickness of the protective layer, and
the thickness of the carbon layer is 5 µm or less.

9. The cathode of claim 1, wherein the composite of Li₂S, the first ionic compound, and the first carbon-based material includes
a composite represented by Li₂S-LiₐX_{b}-C (1≤a≤5, 1≤b≤5), a composite represented by Li₂S-M1ₐX_{b}-C (1≤a≤5, 1≤b≤5), a composite represented by Li₂S-M1ₐS_{b}-C (1≤a≤5, 1≤b≤5), or a combination thereof,
M1 is Mg, Ca, Sr, Ba, Al, Ga, In, V, Nb, Sc, Fe, Ru, Os, or a combination thereof, and
X is I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof.

10. The cathode of claim 9, wherein the first ionic compound includes a first lithium salt, a first metal salt, a first metal sulfide, or a combination thereof, the first lithium salt is a binary compound or a ternary compound,
the binary compound includes LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof,
the ternary compound includes Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof,
the first metal salt includes AlF₃, AlCl₃, AlBr₃, CaF₂, CaCl₂, CaBr₂, or a combination thereof, and
the first metal sulfide includes FeS, MgS, CaS, Al₂S₃, V₂S₃, FeS₂, VS₂, MnS, NiS, CuS, or a combination thereof.

11. The cathode of claim 9, wherein the composite of Li₂S, the first ionic compound, and the first carbon-based material includes a solid solution of Li₂S and the first ionic compound, and
Li₂S crystallites obtained from an X-ray diffraction (XRD) spectrum of the composite of Li₂S, the first ionic compound, and the first carbon-based material have a size of 20 nm or less.

12. The cathode of claim 9, wherein a molar ratio of Li₂S and the first ionic compound in the composite of Li₂S, the first ionic compound, and the first carbon-based material is 50:50 to 95:5,
10 to 80 parts by weight of Li₂S, 1 to 40 parts by weight of the first ionic compound, and 1 to 20 parts by weight of the first carbon-based material are included based on the 100 parts by weight of the composite of Li₂S, the first ionic compound, and the first carbon-based material, and
a size of the composite of Li₂S, the first ionic compound, and the first carbon-based material is 1 to 20 µm, and a D10 particle diameter of the composite of Li₂S, the first ionic compound, and the first carbon-based material is 1 µm or more.

13. The cathode of claim 9, wherein the first carbon-based material includes amorphous carbon, crystalline carbon, or a combination thereof,
the first carbon-based material includes a carbon nanostructure, and the carbon nanostructure includes carbon nanofibers, carbon nanotubes, carbon nanobelts, carbon nanorods, graphene, or a combination thereof, the first carbon-based material includes a fibrous carbon-based material, a particulate carbon-based material, or a combination thereof, and
the particulate carbon-based material includes carbon black, ketjen black, acetylene black, denka black, thermal black, channel black, graphite, activated carbon, or a combination thereof.

14. The cathode of claim 1, wherein the cathode electrode active material layer includes a dry cathode active material layer,
the dry cathode active material layer includes a dry composite cathode active material and a dry second sulfide-based solid electrolyte,
the dry cathode active material layer further includes a dry binder, and the dry binder includes a fluorine-based binder, and
the dry cathode active material layer includes a dry cathode film, and the dry cathode film is a self-standing film.

15. The cathode of claim 1, wherein the cathode current collector includes a base film and a metal layer disposed on one side or both sides of the base film,
the base film includes a polymer, and the polymer includes polyethylene terephthalate (PET), polyethylene (PE), polypropylene (PP), polybutylene terephthalate (PBT), polyimide (PI), or a combination thereof, and
the metal layer includes indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

16. An all-solid-state secondary battery comprising:
the cathode of any one of claims 1 to 15; an anode; and an electrolyte disposed between the cathode and the anode,
wherein the anode includes an anode current collector and a first anode active material disposed on one side of the anode current collector.

17. The all-solid-state secondary battery of claim 16, wherein the first anode active material layer includes an anode active material and a binder,
the anode active material has a particle shape, and an average particle size of the anode active material is 4 µm or less.

18. The all-solid-state secondary battery of claim 16, wherein the anode active material includes at least one selected from a carbon-based anode active material and a metal or metalloid anode active material,
the carbon-based anode active material includes amorphous carbon, crystalline carbon, porous carbon, or a combination thereof,
the metal or metalloid anode active material includes gold (Au), platinum (Pt), palladium (Pd), silicon (Si), silver (Ag), aluminum (Al), bismuth (Bi), tin (Sn), zinc (Zn), or a combination thereof,
the anode active material includes a mixture of first particles consisting of amorphous carbon and second particles consisting of metal or metalloid, and
a content of the second particles is 1 to 60 wt% based on a total weight of the mixture.

19. The all-solid-state secondary battery of claim 16, further comprising: a second anode active material layer disposed between the anode current collector and the first anode active material layer and/or between the anode current collector and the electrolyte layer,
the second anode active material layer is a metal layer, and the metal layer includes lithium or a lithium alloy.

20. The all-solid-state secondary battery of claim 16, wherein the electrolyte layer further includes a solid electrolyte, a gel electrolyte, or a combination thereof,
the solid electrolyte includes a sulfide-based solid electrolyte, an oxide-based solid electrolyte, a polymer solid electrolyte, or a combination thereof, and
the gel electrolyte includes a polymer gel electrolyte.
